# EUROPÄISCHE PATENTSCHRIFT

(11) **EP 2 668 240 B1**
(45) Veröffentlichungstag und Bekanntmachung des Hinweises auf die Patenterteilung: **10.12.2014**
(21) Anmeldenummer: 12701001.5
(22) Anmeldetag: 25.01.2012
(51) Int. Cl.: C09D 5/02, C09D 7/02, C09D 11/02, C09D 17/00, C09B 67/00

(54) **NETZ- UND DISPERGIERMITTEL, VERFAHREN ZUR HERSTELLUNG UND VERWENDUNG**
WETTING AND DISPERSING AGENT, PROCESS FOR MAKING AND USE THEREOF
AGENT MOUILLANT ET DISPERSANT, PROCÉDÉ DE PRODUCTION ET UTILISATION

(30) Priorität: 28.01.2011 EP 11152549
(43) Veröffentlichungstag der Anmeldung: 04.12.2013
(73) Patentinhaber: BYK-Chemie GmbH, 46483 Wesel (DE)
(72) Erfinder: OMEIS, Jürgen, 46286 Dorsten (DE); PRITSCHINS, Wolfgang, 46487 Wesel (DE); PIESTERT, Frederik, 46483 Wesel (DE); KROHNEN, Marcel, 46569 Hünxe (DE); O'SHEA, Sandra, 45966 Gladbeck (DE)
(74) Vertreter: Leifert & Steffan
(86) Internationale Anmeldenummer: PCT/EP2012/051155
(87) Internationale Veröffentlichungsnummer: WO 2012/101180

(56) Entgegenhaltungen:
- EP-A1- 0 826 753
- EP-A1- 1 593 700
- US-A- 4 310 449

## Beschreibung

Die vorliegende Erfindung betrifft ein Netz- und Dispergiermittel herstellbar durch Umsetzung eines Aminogruppen-haltigen organischen Polymers, einer Polyhydroxymonocarbonsäure sowie eines Isocyanats. Zudem betrifft die vorliegende Erfindung ein Verfahren zur Herstellung des Netz- und Dispergiermittels sowie die Verwendung des Netz- und Dispergiermittels in beispielsweise Beschichtungszusammensetzungen wie Lacken oder Pigmentkonzentraten.

### Stand der Technik

Es ist bekannt, Netz- und Dispergiermittel in Beschichtungszusammensetzungen wie beispielsweise Lacken oder in weiteren Produkten wie Dichtstoffen und Kunststoffen beim Einarbeiten von Pigmenten und/oder Füllstoffen zuzuführen, um eine bessere Teilchenstabilisierung im jeweiligen Produkt zu erhalten. Netz- und Dispergiermittel können, je nach Anwendungsgebiet, von unterschiedlicher chemischer Natur sein.

Ein allgemeiner Überblick über die theoretischen Grundlagen und Wirkungsweisen von Netz- und Dispergiermitteln ist dem Buch "Lackadditive" von Johan H. Bieleman (J. Bieleman, Lackadditive, Wiley-VCH, 1998, ISBN 3-527-28819-8) zu entnehmen.

WO 1999/055763 beschreibt aminische Dispergiermittel, die durch Umsetzung von Polyaminen oder Polyiminen mit linearen acrylfunktionalen Polyestern, die aus mindestens zwei verschiedenen Monomeren bestehen, dargestellt werden. Diese Dispergiermittel weisen eine gute Löslichkeit in organischen Medien auf.

Umsetzungsprodukte linearer Polycarbonsäuren mit Polyaminen oder Polyiminen sind beispielsweise in WO 2000/24503 und WO 1994/021368 beschrieben. Diese Verbindungen können in einer Vielzahl verschiedener Medien wie etwa Lacken oder Kunststoffen als Dispergiermittel eingesetzt werden.

Ein Dispergiermittel zur Dispergierung hydrophober Teilchen in wässrigen Systemen wird in WO 2000/037542 beschrieben. Dieses Dispergiermittel besteht aus einem dendritischen Polymer mit periphären, ionisierbaren Gruppen.

WO 2008/037612 beschreibt dendritische Dispergiermittel auf Polyamin- bzw. Polyiminbasis. Die beschriebenen Dispergiermittel weisen um den aminischen Kern eine Hülle aus einem fettsäuremodifizierten dendritischen Polyester auf. Die dadurch erhaltenen Polymere sind vor allem in unpolaren Lacken als Dispergiermittel anwendbar und zeigen beispielsweise eine Viskositätsreduzierung von Pigmentkonzentraten. Zudem weisen Lackschichten, welche mit Lacken hergestellt wurden, die die genannten Pigmentkonzentrate enthalten, vorteilhafte Eigenschaften wie beispielsweise einen hohen Glanz oder eine geringe Neigung zur Vergilbung auf. Als nachteilig hat sich an diesen dendritischen Dispergiermitteln erwiesen, dass sie zum Teil nur schwierig reproduzierbar herstellbar sind. Ein weiteres anwendungstechnisches Problem ist die Tatsache, dass die dendritischen Dispergiermittel meist eine sehr dunkle, teils tiefschwarze Farbe aufweisen. Damit ist die Anwendbarkeit der Dispergiermittel insbesondere in hellen Produkten, beispielsweise in Pigmentkonzentraten und/oder Lacken enthaltend Weißpigmente, jedoch auch in Produkten, die eine sehr kräftige Farbe (beispielsweise rot) aufweisen und/oder in denen es auf eine sehr hohe Farbgenauigkeit ankommt, stark begrenzt. Dies ist insbesondere dann der Fall, wenn in dem jeweiligen Produkt vergleichsweise hohe Anteile des jeweiligen Dispergiermittels eingesetzt werden beziehungsweise benötigt werden, um eine ausreichende dispergierende Wirkung zu erreichen. Bei Anteilen des Dispergiermittels von beispielsweise größer 5 Gew.-%, bezogen auf die Gesamtmenge des jeweiligen Produkts, ist der beschriebenen Einfluss besonders ausgeprägt. Weiter Dispergiermittel sind aus EP 1 593 700 A1, EP 0 826 753 A1 und US 4 310 449 bekannt.

Herkömmliche Dispergiermittel, beispielsweise die oben beschriebenen Dispergiermittel, sind meist auf spezielle Produkte abgestimmt und haben dadurch eine eingeschränkte Breitenanwendbarkeit. Beispielsweise ist eine angemessene Viskositätsreduzierung von Pigmentkonzentraten und/oder pigmentierten Lacken oft nur für einige Pigmenttypen erreichbar.

### Aufgabe der Erfindung

Aufgabe der vorliegenden Erfindung war es demzufolge, ein Netz- und Dispergiermittel bereitzustellen, welches durch seine hervorragende benetzende sowie dispergierende Wirkung zu vorteilhaften Eigenschaften von unterschiedlichen pigmenthaltigen und/oder Füllstoffe enthaltenden Produkten, beispielsweise Pigmentkonzentraten, Beschichtungszusammensetzungen wie Lacken oder auch Dichtstoffen und/oder Kunststoffen, führt. Dabei sollten die Eigenschaften der Produkte im Vergleich zu solchen Produkten, in denen herkömmliche Netz- und Dispergiermittel zum Einsatz kommen, weiter verbessert werden. In besonderem Maße galt es, unterschiedliche Eigenschaften von beispielsweise Pigmentkonzentraten und Beschichtungszusammensetzungen wie Lacken, und damit auch von Beschichtungen beziehungsweise Lackschichten, die unter Verwendung solcher Pigmentkonzentrate und Beschichtungszusammensetzungen hergestellt werden, zu verbessern. Zu nennende Eigenschaften sind beispielsweise eine vergleichsweise niedrige Viskosität, eine gute Lagerstabilität, ein hervorragender Glanz und ein verminderter Glanzschleier. Es sollte eine gute Balance solcher Eigenschaften erreicht werden. Dabei stand im Vordergrund, dass die Eigenschaften, beispielsweise die oben genannten Eigenschaften von Pigmentkonzentraten, Lacken oder Lackschichten, nicht nur in einem speziellen, genau auf das Netz- und Dispergiermittel abgestimmten Produkttyp, sondern in unterschiedlichsten Systemen sehr gut waren. Die Breitenanwendbarkeit des Netzund Dispergiermittels sollte hervorragend sein. Dabei sollten die Eigenschaften in einem bestimmten individuellen System, auf das beispielsweise ein herkömmliches Dispergiermittel abgestimmt ist, zumindest ähnlich gut wie beim Einsatz des jeweiligen herkömmlichen, abgestimmten Dispergiermittels, sein. Unter Umständen sollte sogar eine Verbesserung resultieren. In einem anderen, nicht auf das jeweilige herkömmliche Dispergiermittel abgestimmten System beziehungsweise Produkt, sollten ebenfalls hervorragende Eigenschaften resultieren, die dann zudem ungleich besser sein sollten, als beim Einsatz des jeweiligen herkömmlichen Dispergiermittels. Des Weiteren sollte das Netz- und Dispergiermittel eine im Vergleich zu den bekannten Dispergiermitteln neutralere Farbgebung besitzen. Das Netz- und Dispergiermittel sollte beispielsweise eine weiße oder lediglich leicht bräunliche Farbe besitzen. Insbesondere sollte es möglich sein, eine tiefschwarze Farbgebung des Netz- und Dispergiermittels zu vermeiden, um dadurch letztlich ebenfalls die Breitenanwendbarkeit des Netz- und Dispergiermittels zu verbessern.

### Erfindungsgemäße Lösung

Im Rahmen der vorliegenden Erfindung wurde festgestellt, dass die oben formulierten Aufgaben durch ein neues Netz- und Dispergiermittel gelöst werden konnten, welches dadurch herstellbar ist, dass
in Schritt (1)
(a) ein Aminogruppen-haltiges organisches Polymer enthaltend primäre und/oder sekundäre Aminogruppen
   und
(b) mindestens eine verzweigte Polyhydroxymonocarbonsäure, welche neben einer Carboxylgruppe mindestens zwei Hydroxygruppen aufweist, von denen mindestens eine nicht an die Hauptkette des Moleküls gebunden ist,
durch Kondensationsreaktionen unter Bildung von Amidbindungen umgesetzt werden,
und
in Schritt (2)
zumindest ein Teil der Hydroxygruppen des in Schritt (1) erhaltenen hydroxyfunktionellen Reaktionsprodukts mit mindestens einem organischen Monoisocyanat unter Bildung von Urethanbindungen umgesetzt werden.

Das neue Netz- und Dispergiermittel wird in der Folge als erfindungsgemäßes Netzund Dispergiermittel bezeichnet. Vorteilhafte Ausgestaltungen desselben ergeben sich aus den abhängigen Patentansprüchen.

Gegenstand der vorliegenden Erfindung ist zudem ein Verfahren zur Herstellung des erfindungsgemäßen Netz- und Dispergiermittels. Das Verfahren ist dadurch gekennzeichnet, dass
in Schritt (1)
(a) ein Aminogruppen-haltiges organisches Polymer enthaltend primäre und/oder sekundäre Aminogruppen
   und
(b) mindestens eine verzweigte Polyhydroxymonocarbonsäure, welche neben einer Carboxylgruppe mindestens zwei Hydroxygruppen aufweist, von denen mindestens eine nicht an die Hauptkette des Moleküls gebunden ist,
durch Kondensationsreaktionen unter Bildung von Amidbindungen umgesetzt werden,
und
in Schritt (2)
zumindest ein Teil der Hydroxygruppen des in Schritt (1) erhaltenen hydroxyfunktionellen Reaktionsprodukts mit mindestens einem organischen Monoisocyanat unter Bildung von Urethanbindungen umgesetzt werden.

Vorteilhafte Ausgestaltungen des Verfahrens ergeben sich aus den abhängigen Verfahrensansprüchen.

Des Weiteren ist die Verwendung des erfindungsgemäßen Netz- und Dispergiermittels in einem pigment- und/oder füllstoffhaltigen Produkt ausgewählt aus der Gruppe der Pigmentpasten, Beschichtungszusammensetzungen, Dichtstoffe, Druckfarben, Tinten und Kunststoffe Gegenstand der vorliegenden Erfindung.

Die erfindungsgemäßen Netz- und Dispergiermittel weisen eine hervorragende benetzende und dispergierende Wirkung auf, die zu vorteilhaften Eigenschaften von unterschiedlichen pigmenthaltigen und/oder füllstoffhaltigen Produkten, beispielsweise Pigmentkonzentraten und pigmentierten Beschichtungszusammensetzungen wie Lacken, sowie von unter Verwendung solcher Pigmentkonzentrate und Beschichtungszusammensetzungen hergestellten Beschichtungen, führt. Dabei wird eine gut Balance verschiedener Eigenschaften, beispielsweise eine gute Lagerstabilität, ein hoher Glanz und ein niedriger Glanzschleier erreicht. Im Vergleich zu herkömmlichen Netz- und Dispergiermitteln wird zudem eine verbesserte Breitenanwendbarkeit erzielt. Des Weiteren kann eine tiefschwarze Farbgebung der erfindungsgemäßen Netz- und Dispergiermittel vermieden werden. Insbesondere weisen die erfindungsgemäßen Netz- und Dispergiermittel eine weiße oder leicht hellbraune Farbe auf. Insbesondere weisen die erfindungsgemäßen Netz- und Dispergiermittel eine deutlich hellere Farbe auf.

### Ausführliche Beschreibung der Erfindung

Das erfindungsgemäße Netz- und Dispergiermittel ist herstellbar durch Umsetzung eines Aminogruppen-haltigen organischen Polymers (a) mit den weiter unten beschriebenen Komponenten. Das Aminogruppen-haltige organische Polymer (a) ist aus einer Mehrzahl, insbesondere mindestens 5, gleichen oder verschiedenen Monomereinheiten aufgebaut und besitzt mindestens eine, bevorzugt mehrere, insbesondere mindestens 5, Aminogruppen. Dabei können die Aminogruppen primär, sekundär und/oder tertiär sein. Das Aminogruppen-haltige organische Polymer (a) umfasst jedoch mindestens eine, vorzugsweise mehr als eine, besonders bevorzugt mindestens 5 Aminogruppen, die primär und/oder sekundär sind.

Das Aminogruppen-haltige organische Polymer (a) ist vorzugsweise ein aliphatisches Poly-(C₂-C₄)-alkylenamin. Besonders bevorzugt wird es ausgewählt aus der Gruppe der Polyethylenimine, Polyvinylamine, Polyallylamine, sowie Copolymeren dieser Polymere. Ganz besonders bevorzugt werden verzweigte aliphatische Polyamine mit primären, sekundären und tertiären Aminogruppen eingesetzt. Insbesondere vorteilhaft sind die auch unter dem Namen Polyethylenimine bekannten Aziridinhomopolymere wie beispielsweise die Lupasol TM Typen der Fa. BASF SE oder die Epomin Typen der Fa. Nippon Shokubai. Diese werden nach bekannten Verfahren, beispielsweise durch die Polymerisation von Ethylenimin, hergestellt. Das Verhältnis von primären zu sekundären zu tertiären Stickstoff-Atomen kann stark variieren und liegt vorzugsweise, wie bei den entsprechenden handelsüblichen Produkten üblich, etwa im Bereich von 2 zu 2 zu 1. Die Gesamtmenge von Aminogruppen in diesen Polymeren liegt, wie bei den entsprechenden handelsüblichen Produkten üblich, etwa im Bereich von 20 mmol Aminogruppen pro Gramm Polymer. Unter diesen verzweigten aliphatischen Polyaminen werden bevorzugt Typen mit einem zahlenmittleren Molekulargewicht von etwa 200 - 200000 g/mol (Mₙ, ebullioskopisch gemessen), besonders bevorzugt Typen mit einem zahlenmittleren Molekulargewicht von etwa 250 - 40000 g/mol, eingesetzt.

Die Protonen an den primären und sekundären Aminogruppen dieser organischen Aminogruppen-haltigen organischen Polymere (a) können dabei gegebenenfalls anteilig gegen Alkyl-, Aryl- und/oder Aralkylgruppen ausgetauscht sein. Zudem können die Aminogruppen auch anteilig über Alkyl-, Aryl- und/oder Aralkylgruppen quaternisiert sein.

Die bevorzugt eingesetzten Polyethylenimine, Polyvinylamine und/oder Polyallylamine, insbesondere Polyethylenimine, sind vorzugsweise speziell modifiziert. Die Modifizierung erfolgt durch Umsetzung des Aminogruppen-haltigen organischen Polymers (a) mit Monomeren ausgewählt aus der Gruppe der Lactone, alkylsubstituierten Lactone, Monohydroxymonocarbonsäuren und Monocarbonsäuren. Dabei wird zumindest ein Teil der primären und/oder sekundären Aminogruppen des Aminogruppen-haltigen organischen Polymers (a) unter Bildung von Amidbindungen mit Resten basierend auf den genannten Monomeren modifiziert. Erfolgt die Modifizierung anhand von Lactonen, alkylsubstituierten Lactonen und/oder Monohydroxymonocarbonsäuren, was erfindungsgemäß bevorzugt ist, so können die modifizierten Aminogruppen Reste basierend auf genau einem Monomer der genannten Verbindungen tragen. Bevorzugt handelt es sich aber zumindest bei einem Teil der modifizierten Aminogruppen bei den Resten um lineare Polyesterketten umfassend mindestens 2, bevorzugt 2 bis 100, insbesondere 2 bis 25 Monomereinheiten der genannten Monomeren. Solche Modifizierungen können beispielsweise mit Hilfe von dem Fachmann geläufigen Polymerisationsverfahren von Lactonen bei Temperaturen von etwa 70°C bis 180°C, beispielsweise unter Einsatz von entsprechenden üblichen Katalysatoren, wie organischen Zinnverbindungen wie Dibutylzinndilaurat, oder durch dem Fachmann an sich bekannte Polykondensationsverfahren von Monohydroxymonocarbonsäuren bei Temperaturen von etwa 50 bis 200°C eingeführt werden. In jedem Fall trägt jeder Rest, der durch die Modifizierung eingebracht wurde, genau eine freie Hydroxygruppe. Somit besitzt das Aminogruppen-haltige organische Polymer (a) für jede primäre und sekundäre Aminogruppe, die durch die Modifizierung in eine Amidbindung überführt wurde, nach der Modifizierung genau eine freie Hydroxygruppe. Wie bereits angegeben, wird zumindest ein Teil der primären und/oder sekundären Aminogruppen des jeweiligen Aminogruppen-haltigen organischen Polymers (a), insbesondere des Polyethylenimins, wie beschrieben modifiziert beziehungsweise umgesetzt. Vorzugsweise wird der jeweils größtmögliche Anteil der primären und/oder sekundären Aminogruppen modifiziert beziehungsweise umgesetzt. Unter dem größtmöglichen Anteil ist im Rahmen der vorliegenden Erfindung der Anteil von primären und/oder sekundären Aminogruppen zu verstehen, der bei einer wie oben beschriebenen Umsetzung maximal modifiziert werden kann. Theoretisch handelt es sich dabei um alle primären und/oder sekundären Aminogruppen, die das jeweilige Aminogruppen-haltige organische Polymer (a) umfasst. In der Praxis werden jedoch regelmäßig nicht alle primären und/oder sekundären Aminogruppen umgesetzt, da ein Teil dieser Aminogruppen beispielsweise durch den Aufbau beziehungsweise die räumliche Anordnung des Polymers (a) und/oder durch die bereits angebundenen Modifizierungsreste, beispielsweise die linearen Polyesterketten, sterisch abgeschirmt ist und somit nicht umgesetzt wird.

Insbesondere wird im Rahmen der vorliegenden Erfindung eine wie vorstehend erläuterte Umsetzung beziehungsweise Modifizierung dadurch erreicht, dass die Monomere zur Modifizierung (Lactone, alkylsubstituierten Lactone, Monohydroxymonocarbonsäuren und/oder Monocarbonsäuren) im stöchiometrischen Überschuss zur der Gesamtmenge von primären und/oder sekundären Aminogruppen des Aminogruppen-haltigen organischen Polymers (a) eingesetzt werden. Insbesondere vorteilhaft liegt das Molverhältnis der Monomere zur Modifizierung zu den primären und/oder sekundären Aminogruppen des Aminogruppen-haltigen organischen Polymers (a) im Bereich von 1/1 bis 100/1, bevorzugt im Bereich von 1/1 bis 25/1, besonders bevorzugt im Bereich 2/1 bis 20/1.

Die wie oben beschriebenen Modifizierungen werden vor der weiter unten beschriebenen Umsetzung des Aminogruppen-haltigen organischen Polymers (a) mit der mindestens einen verzweigten Polyhydroxymonocarbonsäure eingeführt. Dies bedeutet, dass die Modifizierung des jeweiligen Aminogruppen-haltigen organischen Polymers (a) stets in einem eigenständigen Schritt erfolgt. Besonders bevorzugt ist im Rahmen der vorliegenden Erfindung die Modifizierung des Aminogruppen-haltigen organischen Polymers (a) mit ε-Caprolacton und/oder δ-Valerolacton unter Bildung von über Amidbindungen angebundenen linearen Polyesterketten.

### Schritt (1)

Für die Herstellung des erfindungsgemäßen Netz- und Dispergiermittels werden in einem ersten Schritt zunächst das Aminogruppen-haltige organische Polymer (a) und mindestens eine verzweigte Polyhydroxymonocarbonsäure (b), welche neben einer Carboxylgruppe mindestens zwei Hydroxygruppen aufweist, von denen mindestens eine nicht an die Hauptkette des Moleküls gebunden ist, umgesetzt (Schritt (1)). Verzweigt bedeutet bekanntermaßen, dass das Monomer nicht nur eine lineare Kohlenstoffkette aufweist, sondern mindestens eine Verzweigung in der Kette besitzt beziehungsweise zumindest eine Seitenkette besitzt. Die Hauptkette des Moleküls wird nach den geläufigen IUPAC Regeln bestimmt, beispielsweise kann es sich um die längste Kohlenstoffkette im jeweiligen Molekül handelt oder bei Mehrdeutigkeit dieses Parameters um eine entsprechend substituierte Kohlenstoffkette. Liegen zwei völlig übereinstimmende Kohlenstoffketten vor, die beide als Hauptkette gewertet werden können, so wird eine der beiden entsprechenden Ketten als Hauptkette festgelegt und die jeweils andere formal als Verzweigung beziehungsweise Seitenkette angesehen. Die mindestens eine Hydroxygruppe, die nicht an der Hauptkette liegt, liegt demnach an einem Kohlenstoffatom vor, welches Teil einer Verzweigung beziehungsweise Teil einer Seitenkette des Moleküls und nicht Teil der Hauptkette ist.

Vorzugsweise werden als verzweigte Polyhydroxymonocarbonsäuren (b) 2,2-Bis(hydroxymethyl)propionsäure und/oder 2,2-Bis(hydroxymethyl)buttersäure, eingesetzt. Ganz besonders bevorzugt ist 2,2-Bis(hydroxymethyl)propionsäure. Die mindestens eine verzweigte Polyhydroxymonocarbonsäure (b) wird jeweils über die Carboxylgruppe durch eine Kondensationsreaktion mit dem organischen Polymers (a) verknüpft. Solche Kondensationsreaktionen werden beispielsweise bei Temperaturen von etwa 50° C bis 200 °C durchgeführt. Weitere Informationen zu der Reaktionsführung sind den weiter unten angegebenen Beispielen zu entnehmen. Dabei kann es sich um eine Verknüpfung mit einer primären oder sekundären Aminogruppe des Aminogruppen-haltigen Polymers (a) unter Bildung einer Amidbindung handeln. Möglich beziehungsweise bevorzugt ist allerdings, dass das Aminogruppen-haltige Polymer (a) vor dem Schritt (1) wie weiter oben erläutert modifiziert wird. Im Rahmen der vorliegenden Erfindung ist gemäß obigen Ausführungen zufolge zu berücksichtigen, dass das jeweilige Aminogruppen-haltige organische Polymer (a), sofern es modifiziert wurde, vorzugsweise keine sterisch zugänglichen primären und/oder sekundären Aminogruppen mehr besitzt beziehungsweise gegebenenfalls überhaupt keine primären und/oder sekundären Aminogruppen mehr besitzt. Dies kann dann bedeuten, dass im Schritt (1) (Umsetzung des Aminogruppen-haltige organischen Polymers (a) und mindestens einer verzweigten Polyhydroxymonocarbonsäure (b)) keine primären und/oder sekundären Aminogruppen mit der verzweigten Polyhydroxymonocarbonsäure (b) umgesetzt werden. Es findet dann lediglich eine Umsetzung der mindestens einen verzweigten Polyhydroxymonocarbonsäure (b) und den durch die Modifizierung des Aminogruppen-haltigen organischen Polymers (a) eingeführten Hydroxygruppen, von denen jeweils genau eine in einem bei der Modifizierung eingeführten Rest, vorzugsweise den linearen Polyesterketten, vorhanden ist unter Bildung von Esterbindungen statt. Es ist also möglich, dass das Aminogruppen-haltige organische Polymer (a) nach der Modifizierung und vor der Umsetzung in Schritt (1) keine sterisch zugänglichen, gegebenenfalls überhaupt keine primären und sekundären Aminogruppen mehr besitzt. Unabhängig davon, ob eine Modifizierung vorliegt oder nicht vorliegt, handelt es sich jedoch bei dem in Schritt (1) eingesetzten Polymer (a) um das grundsätzlich selbe Makromolekül. Daher wird im Rahmen der vorliegenden Erfindung auch ein wie beschrieben modifiziertes Polymer immer als Aminogruppen-haltiges organisches Polymer (a) beziehungsweise als Aminogruppen-haltiges organisches Polymer (a) enthaltend primäre und/oder sekundäre Aminogruppen bezeichnet.

Vorteilhafterweise wird die mindestens eine verzweigte Polyhydroxymonocarbonsäure (b) mindestens äquimolar, insbesondere im stöchiometrischen Überschuss zu der Gesamtanzahl von in dem Aminogruppen-haltigen organischen Polymer (a) vorhandenen primären und sekundären Aminogruppen eingesetzt. Insbesondere liegt das Molverhältnis der primären und sekundären Aminogruppen der Komponente (a) zu Komponente (b) im Bereich von 0,001 bis 1, insbesondere im Bereich von 0,01 bis 1, besonders bevorzugt im Bereich von 0,1 bis 1. Die angegebenen Bereiche des Molverhältnisses beziehen sich jeweils auf die Komponenten (a) und (b) vor einer möglichen Modifizierung der Komponenten, beispielsweise der oben beschriebenen speziellen Modifizierung des Aminogruppen-haltigen organischen Polymers (a) und/oder der speziellen, weiter unten beschriebenen Modifizierung der mindestens einen Polyhydroxymonocarbonsäure (b). In besonderen Ausführungsformen der vorliegenden Erfindung verläuft gleichzeitig neben der oben beschriebenen Kondensationsreaktion zwischen dem Aminogruppen-haltigen organischen Polymer (a) und der mindestens einen verzweigten Polyhydroxymonocarbonsäure (b) unter Bildung von Amidbindungen auch eine Kondensationsreaktion zwischen den einzelnen Polyhydroxymonocarbonsäure-Molekülen untereinander unter Bildung von Esterbindungen. Dies ist beispielsweise erreichbar durch entsprechende Wahl des Molverhältnisses der primären und sekundären Aminogruppen der Komponente (a) zu Komponente (b). Insbesondere ist die beschriebene Kondensationsreaktion zwischen den einzelnen Polyhydroxymonocarbonsäure-Molekülen untereinander unter Bildung von Esterbindungen erreichbar durch den Einsatz der weiter oben als bevorzugt beschriebenen Molverhältnisse der primären und sekundären Aminogruppen der Komponente (a) zu Komponente (b). Dabei verestert die eine Carboxylgruppe eines Moleküls jeweils mit einer der Hydroxygruppen eines weiteren Moleküls. Durch die Verknüpfung der Polyhydroxymonocarbonsäure-Moleküle untereinander und die Tatsache, dass jedes Polyhydroxymonocarbonsäure-Molekül genau eine Carboxylfunktion und mindestens zwei Hydroxyfunktionen besitzt, bauen sich, ausgehend von dem ersten Molekül, dass an das Aminogruppen-haltige organische Polymer (a) geknüpft ist, entsprechend mehrere Schichten von immer weiter verzweigten Struktureinheiten auf. Jede neue Schicht kann als neue Generation bezeichnet werden. Dabei können alle oder nur ein Teil der jeweils vorhandenen Hydroxygruppen in einer Schicht mit den Carboxylgruppen von weiteren Polyhydroxymonocarbonsäure-Molekülen verestert werden, wodurch dann eine jeweils neue Schicht beziehungsweise Generation aufgebaut wird. Natürlich muss bereits eine einzige Generation als verzweigende Einheit bezeichnet werden. Dies ist dadurch bedingt, dass sich die mindestens zwei Hydroxygruppen des Moleküls wie oben beschrieben in zueinander verzweigten Ketten befinden. Bevorzugt ist allerdings die Bildung mehrerer Generationen, die dann die beschriebene Kondensationsreaktion zwischen den einzelnen Polyhydroxymonocarbonsäure-Molekülen untereinander voraussetzt. Der Grad der Verzweigung beziehungsweise die Anzahl an Generationen ist dabei natürlich von unterschiedlichen Faktoren wie beispielsweise dem molaren Verhältnis der primären und sekundären Aminogruppen der Komponente (a) zu Komponente (b) abhängig.

Ein wichtiger Faktor ist beispielsweise auch, in wie weit die jeweiligen Hydroxygruppen einer Generation sterisch zugänglich sind. Dies wiederum ist beispielsweise abhängig davon, wie das Makromolekül, insbesondere das Aminogruppen-haltige organische Polymer (a), räumlich aufgebaut ist.

Ausgehend von dem polyaminischen Kern beziehungsweise dem Aminogruppen-haltigen organischen Polymer (a) bauen sich die beschriebenen Struktureinheiten sternförmig und nach außen wachsend auf. Im Rahmen der vorliegenden Erfindung kann es sich um nur geringfügig verzweigende Polyestereinheiten mit lediglich ein oder zwei Generationen handeln. Möglich beziehungsweise bevorzugt sind aber auch komplexere Struktureinheiten mit mehr als zwei Generationen, die dann als hochverzweigte Strukturen bezeichnet werden können. In besonderen Ausführungsformen der vorliegenden Erfindung liegt die Anzahl von Generationen im Bereich von 1 bis 200, vorzugsweise im Bereich von 1 bis 50. Eine solche Anzahl von Generationen kann im Rahmen der vorliegenden Erfindung durch Einsatz der in Schritt (1) einzusetzenden Komponenten (a) und (b) in den weiter oben beschriebenen Molverhältnissen von primären und sekundären Aminogruppen der Komponente (a) zu Komponente (b), das heißt also insbesondere durch Einsatz von stöchiometrischen Überschüssen der Komponente (b) zu den primären und sekundären Aminogruppen der Komponente (a), erzielt werden.

Die folgende Formel (I) zeigt zur besseren Übersichtlichkeit einen Ausschnitt eines sternförmig nach außen gewachsenen Kondensationsprodukts umfassend eine (nicht modifizierte) Aminogruppen-haltige organische Polymereinheit sowie verzweigende Polyestereinheiten mit mehreren Generationen, die auf einer Polyhydroxymonocarbonsäure (b) basieren. Für die Darstellung wurde als Polyhydroxymonocarbonsäure (b) die bevorzugte Verbindung 2,2-Bis(hydroxy-methyl)propionsäure gewählt.

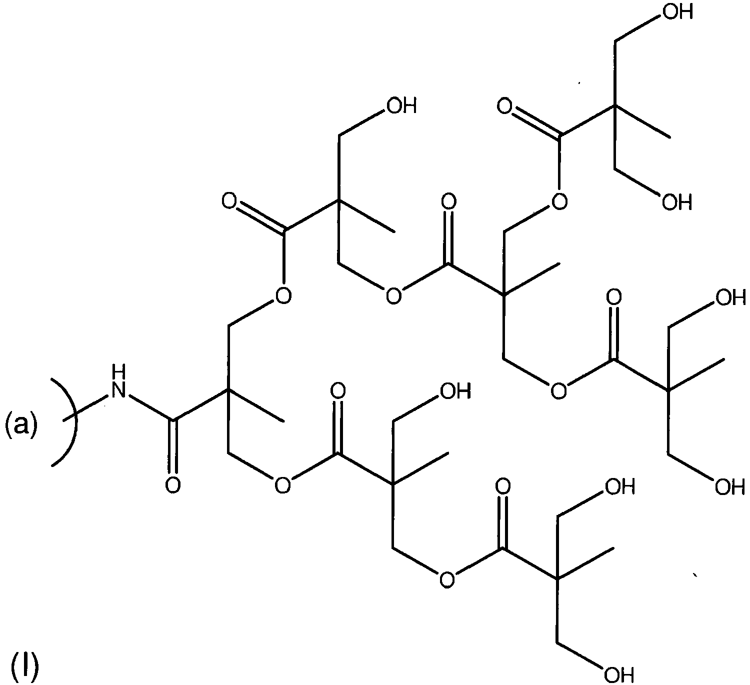

In bevorzugten Ausführungsformen der vorliegenden Erfindung wird die Komponente (b) vor der Umsetzung gemäß Schritt (1) speziell modifiziert. Dazu wird die mindestens eine Polyhydroxymonocarbonsäure (b) unter Bildung von Esterbindungen mit Monomeren ausgewählt aus der Gruppe der Lactone, alkylsubstituierten Lactone und Monohydroxymonocarbonsäuren umgesetzt. Primär erfolgt dabei eine Umsetzung zumindest eines Teils der Hydroxygruppen der Polyhydroxymonocarbonsäure-Moleküle mit den angegebenen monomeren Verbindungen. Dabei können die Hydroxygruppen mit Resten basierend auf genau einem Monomer der genannten monomeren Verbindungen modifiziert sein. In der Regel aber handelt es sich zumindest anteilig um lineare Polyesterketten umfassend 2 bis 100 Monomereinheiten, bevorzugt 2 bis 25 Monomereinheiten, der genannten Verbindungen. Solche Umsetzungen beziehungsweise Modifizierungen können beispielsweise mit Hilfe von dem Fachmann geläufigen Polymerisationsverfahren von Lactonen bei Temperaturen von etwa 70°C bis 180°C, beispielsweise unter Einsatz von entsprechenden üblichen Katalysatoren, wie organischen Zinnverbindungen wie Dibutylzinndilaurat, oder durch dem Fachmann an sich bekannte Polykondensationsverfahren von Monohydroxymonocarbonsäuren bei Temperaturen von etwa 50°C bis 200 °C durchgeführt werden. Durch eine solche Modifizierung wird die Raumdichte an Hydroxygruppen in dem dann entstehenden neuen Molekül reduziert. In jedem Fall trägt jeder Rest, der durch die oben beschriebene, primär stattfindende Modifizierung eingebracht wurde, genau eine freie Hydroxygruppe, sodass die Gesamtanzahl von Hydroxygruppen der Komponente (b) durch diese Modifizierung nicht verändert wird.

Wie dem Fachmann jedenfalls geläufig ist, können im Verlaufe der beschriebenen Umsetzung beziehungsweise Modifizierung der Komponente (b) und der damit bevorzugt einhergehenden Bildung von linearen Polyesterketten als Reste aus rein statistischen Gründen auch Polyhydroxymonocarbonsäure-Moleküle (b) selbst in die Polyesterketten einpolymerisiert werden. Dies ist dadurch bedingt, dass die Komponente (b) ebenfalls eine Carboxylgruppe sowie Hydroxygruppen umfasst. Durch das Einpolymerisieren der Polyhydroxymonocarbonsäure-Moleküle (b) resultieren dann entsprechende hydroxyfunktionelle Verzweigungsstellen im Molekül, an welche dann wiederum über die beschriebene Reaktionsführung entsprechende Reste, insbesondere lineare Polyesterketten, angeknüpft werden können. Jedes einpolymerisierte Polyhydroxymonocarbonsäure-Molekül führt dann zu genau einer zusätzlichen Verzweigungsstelle und erhöht die Gesamtanzahl an Hydroxygruppen des jeweiligen modifizierten Moleküls der Komponente (b) um genau eine Hydroxygruppe. Letztlich werden auf diese Weise hinsichtlich der Verzweigungen beziehungsweise Generationen ähnliche Strukturen erzeugt, wie sie weiter oben bei der Beschreibung von Schritt (1) beschrieben werden. Es handelt sich damit um eine dem eigentlichen Schritt (1) vorgelagerte Verzweigungsreaktion. Unterscheidend ist jedoch die Tatsache, dass die beschriebenen linearen Polyesterketten als Spacereinheiten zwischen die einzelnen Generationen eingefügt werden.

Das Molverhältnis der modifizierenden Monomere ausgewählt aus der Gruppe der Lactone, alkylsubstituierten Lactone und Monohydroxymonocarbonsäuren zu der mindestens einen Polyhydroxymonocarbonsäure (b) liegt bei der Modifizierung der Komponente (b) beispielsweise im Bereich von 0,01/1 bis 1000/1, bevorzugt im Bereich von 1/1 bis 100/1, insbesondere vorteilhaft im Bereich 1/1 bis 10/1. Insbesondere mit den bevorzugten Molverhältnissen lässt sich erreichen, dass zum einen die Hydroxygruppen der Komponente (b) zumindest anteilig mit linearen Polyesterketten umfassend mehrere, insbesondere 2 bis 25 Monomereinheiten, modifiziert werden, zum anderen zumindest eine anteilige wie oben beschriebenen Vorverzweigung durch Einpolymerisation von Polyhydroxymonocarbonsäure-Molekülen (b) entsteht.

Die wie oben beschriebenen Modifizierungen von Komponente (b) werden vor der weiter oben beschriebenen Umsetzung von Komponente (a) und (b) (Schritt (1)) eingeführt. Dies bedeutet, dass die Modifizierung der jeweiligen mindestens einen Polyhydroxymonocarbonsäuren (b) stets in einem eigenständigen Schritt erfolgt.

Besonders bevorzugt ist im Rahmen der vorliegenden Erfindung die Modifizierung der Polyhydroxymonocarbonsäuren (b) mit ε-Caprolacton und/oder δ-Valerolacton. Die folgende Formel (II) zeigt zur besseren Übersichtlichkeit einen Ausschnitt eines sternförmig nach außen gewachsenen Kondensationsprodukts umfassend eine (nicht modifizierte) Aminogruppen-haltige organische Polymereinheit sowie verzweigende Polyestereinheiten mit mehreren Generationen, die auf wie oben beschrieben speziell modifizierter 2,2-Bis(hydroxymethyl)propionsäure als modifizierte Polyhydroxymonocarbonsäure (b) basieren. 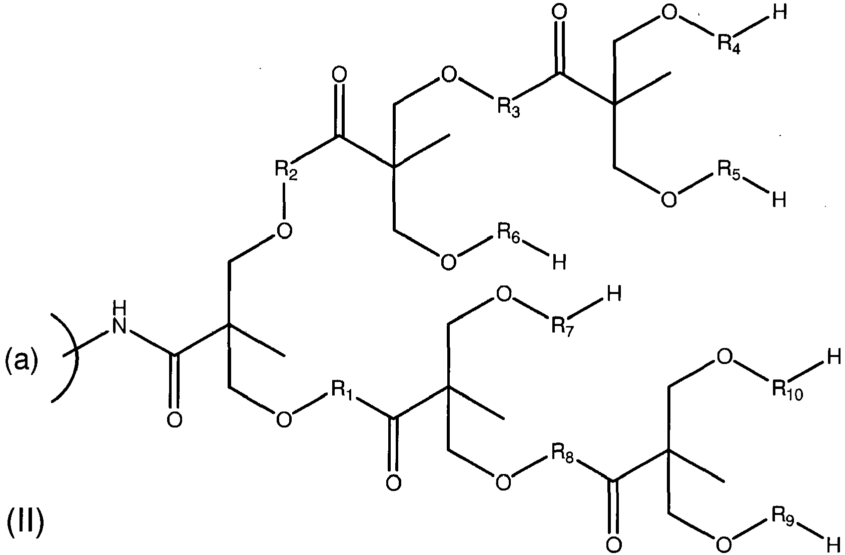 wobei R₁ bis R₁₀ = 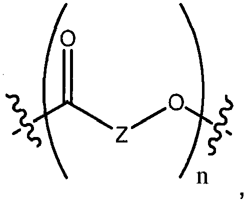 mit:
n ≥ 1, bevorzugt 2 bis 100, insbesondere 2 bis 25,
Z = gleiche oder verschiedene aliphatische Struktureinheiten, abhängig vom jeweiligen Monomer ausgewählt aus der Gruppe der Lactone, alkylsubstituierten Lactone und Monohydroxymonocarbonsäuren,
wobei R₁ bis R₁₀ gleich oder verschieden, vorzugsweise verschieden sind.

Es ist darauf hinzuweisen, dass für die Bestimmung der Positionen der Hydroxygruppen in Abhängigkeit von der Hauptkette, den Seitenketten oder den Verzweigungen, wie sie weiter oben beschrieben wurde, auch in den modifizierten Polyhydroxymonocarbonsäuren das nicht modifizierte Stammmolekül maßgeblich ist. Hauptkette, Seitenketten und Verzweigungen werden im Rahmen der vorliegenden Erfindung im Hinblick auf die Bestimmung der Positionen der Hydroxygruppen nicht durch die Modifizierung verändert. Durch die Modifizierung wird lediglich eine Spacereinheit, vorzugsweise eine wie oben definierte Polyesterkette, zwischen Stammmolekül und Hydroxygruppe eingefügt.

### Schritt (2):

Das hydroxyfunktionelle Reaktionsprodukt aus Schritt (1), welches eine Aminogruppen-haltige organische Polymereinheit sowie Polyestereinheiten, welche gegebenenfalls hochverzweigten Charakter haben, enthält, wird in einem zweiten Schritt mit mindestens einem organischen Monoisocyanat enthaltend genau eine Isocyanatgruppe umgesetzt (Schritt (2)), wodurch das erfindungsgemäße Netz- und Dispergiermittel entsteht. Die organischen Monoisocyanat-Moleküle werden über die Isocyanatgruppen durch Verknüpfung mit zumindest einem Teil der Hydroxygruppen des unter Schritt (1) erhaltenen Reaktionsprodukts unter Bildung einer Urethanbindung eingeführt, wodurch das erfindungsgemäße Netz- und Dispergiermittel entsteht. Bevorzugt werden mehr als 5 mol-%, insbesondere 5 bis 95 mol-%, besonders bevorzugt 20 bis 80 mol-%, ganz besonders bevorzugt 30 bis 75 mol-% der Hydroxygruppen des unter Schritt (1) erhaltenen Reaktionsprodukts mit dem mindestens einen organischen Monoisocyanat umgesetzt. Die Bestimmung des Umsatzes der Hydroxylgruppen erfolgt über die Bestimmung der Hydroxylzahl (gemäß DIN / ISO 4629) des nach Schritt (1) resultierenden Produktes und des nach Schritt (2) resultierenden erfindungsgemäßen Netz- und Dispergiermittels.

Als organischen Monoisocyanate werden beispielsweise Verbindungen ausgewählt aus der Gruppe der Monoisocyanate enthaltend organische Einheiten wie Alkylen-, Cycloalkylen-, Alkenyl-, Alkinyl-, Arylen-, Polyether-, Polyester- und/oder Fettsäurereste sowie Mischungen solcher Reste. Bevorzugt werden solche organischen Monoisocyanate eingesetzt, die einen linearen oder verzweigten oder cyclischen Alkylrest mit gegebenenfalls weiteren linearen und/oder verzweigten Gruppen, der gegebenenfalls eine oder mehrere Doppel- und/oder Dreifachbindungen enthalten kann und welcher 1 bis 50 Kohlenstoffatome aufweist, enthalten und/oder es werden Arylisocyanate, isocyanatfunktionelle Polyether, isocyanatfunktionelle Polyester, isocyanatfunktionelle Polytetrahydrofurane, isocyanatfunktionelle Polyetherester oder Fettsäuremonoisocyanate sowie Mischungen solcher Verbindungen eingesetzt. Bevorzugt werden isocyanatfunktionelle Polyether, isocyanatfunktionelle Polytetrahydrofurane, isocyanatfunktionelle Polyester und/oder isocyanatfunktionelle Polyetherester eingesetzt.

Die organischen Monoisocyanate sind vorzugsweise Umsetzungsprodukte von Diisocyanaten mit unterschiedlichen Monoalkoholen. Dies bedeutet, dass die organischen Monoisocyanate neben den oben genannten organischen Einheiten vorzugsweise mindestens eine, insbesondere genau eine Urethangruppe enthalten, die jeweils durch die Umsetzung eines Diisocyanats mit einem Monoalkohol entsteht. Die Reaktion kann beispielsweise in stöchiometrischem Überschuss (beispielsweise 2 bis 10 Äquivalente, bezogen auf den Monoalkohol) des Diisocyanats und/oder durch Vorlage des Diisocyanats und langsames Zutropfen des Monoalkohols bei Temperaturen von etwa 20°C bis 80°C durchgeführt werden. Gegebenenfalls überschüssiges Diisocyanat kann nach Abschluss der Reaktion destillativ entfernt werden. Weitere Informationen zu der beschriebenen Reaktion von Diisocyanaten mit Monoalkoholen sind den weiter unten angegebenen Beispielen zu entnehmen.

Als Diisocyanat kommen die dem Fachmann bekannten Diisocyanate zum Einsatz wie beispielsweise Isophorondiisocyanat, 1,2-Diisocyanatocyclohexan, 1,3 Diisocyanatocyclohexan, 1,4-Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptamethylendiisocyanat, 2,4-Toluylendiisocyanat, 2,6-Toluylendiisocyanat und Mischungen solcher Diisocyanate. Bevorzugt werden 2,4-Toluylendiisocyanat, und/oder 2,6-Toluylendiisocyanat eingesetzt.

Zur Umsetzung der Diisocyanate verwendbare Monoalkohole sind zum Beispiel geradkettige oder verzweigte Alkohole wie Methanol, Ethanol, Butanol, Ethylhexanol, Decanol, Isotridecylalkohol, Laurylalkohol, Stearylalkohol, Isobornylalkohol, Benzylalkohol, Propargylalkohol, Oleylalkohol, Linoleylalkohol, Oxoalkohole, Neopentylalkohol Cyclohexanol, Fettalkohole, Alkylphenole, Monophenyldiglykol, Alkylnaphthole, Phenylethanol und/oder Monohydroxymonocarbonsäuren. Bevorzugt kommen monohydroxyfunktionelle Polyester, Polyether und/oder Polyetherester zum Einsatz.

Bevorzugte monohydroxyfunktionelle Polyester sind solche, die durch Polykondensation einer oder mehrerer, gegebenenfalls alkylsubstituierter, Hydroxycarbonsäuren und/oder Ringöffnungspolymerisation der korrespondierenden Lactone wie zum Beispiel Propiolacton, γ-Butyrolacton, δ-Valerolacton, ε-Caprolacton mittels einer Monohydroxy-Startkomponente erhalten werden können. Bevorzugt besitzen diese ein zahlenmittleres Molekulargewicht Mₙ von 150 bis 5000 g/mol. Die als Startkomponente verwendeten monofunktionellen Alkohole besitzen vorzugsweise 1 bis 30, insbesondere bevorzugt 4 bis 14 Kohlenstoffatome. Zum Einsatz können beispielsweise n-Butanol, Ethylhexanol, Decanol, Isotridecylalkohol, Laurylalkohol, Stearylalkohol, längerkettige, gesättigte und ungesättigte Alkohole wie Propargylalkohol, Oleylalkohol, Linoleylalkohol, Oxoalkohole, Cyclohexanol, Phenylethanol, aber auch fluorierte Alkohole, hydroxyfunktionelle Vinylverbindungen wie zum Beispiel Hydroxybutylvinylether, hydroxyfunktionelle (Meth)Acrylate wie zum Beispiel Hydroxyethyl(meth)acrylat, Hydroxybutyl(meth)acrylat und/oder hydroxyfunktionelle Polyalkylenglykol(meth)acrylate kommen. Es können auch Alkohole der zuvor beschriebenen Art und substituierte und unsubstituierte Phenole durch Alkoxylierung nach bekannten Verfahren mit Alkylenoxiden wie zum Beispiel Ethylenoxid, Propylenoxid, Butylenoxid und/oder Styroloxid in Polyoxyalkylenmonoalkyl-, Polyoxyalkylenmonoaryl-, Polyoxyalkylenmonoaralkylund Polyoxyalkylenmonocycloalkylether überführt werden und diese Hydroxypolyether in der vorbeschriebenen Art als Startkomponente für die Lactonpolymerisation eingesetzt werden. Es können auch jeweils Gemische der vorgenannten Verbindungen eingesetzt werden. Die Lactonpolymerisation wird nach bekannten Verfahren katalysiert, beispielsweise durch Zugabe von p-Toluolsulfonsäure oder Dibutylzinndilaurat, bei Temperaturen von etwa 70° C bis 180°C. Besonders bevorzugt sind Polyester auf ε-Caprolacton-Basis, gegebenenfalls in Kombination mit δ-Valerolacton.

Bevorzugt können auch Monohydroxypolyether eingesetzt werden. Diese können zum Beispiel durch Alkoxylierung der zuvor beschriebenen Monoalkohole wie Alkanolen, Cycloalkanolen, Phenolen oder den vorstehend beschriebenen Hydroxypolyestern mit Alkylenoxiden wie Ethylenoxid, Propylenoxid, Butylenoxid, Styroloxid oder Mischungen davon erhalten werden. Im Falle von gemischten Polyethern können diese statistisch, als Gradient oder in Blöcken angeordnet sein. Diese Polyether haben zweckmäßig ein zahlenmittleres Molekulargewicht (Mₙ) im Bereich von etwa 100 bis 10000, bevorzugt von 150 bis 5000 und besonders bevorzugt von 200 bis 3500 g/mol. Bevorzugt sind Polyether auf Basis von Ethylenoxid, Propylenoxid und deren Mischungen. Weiter bevorzugt sind monohydroxyfunktionelle Polyoxyalkylenmonoalkohole wie Allylpolyether wie beispielsweise Polyglykol A 350, Polyglykol A 500, Polyglykol A 1100, Polyglykol A 11-4, Polyglykol A 20-10 oder Polyglykol A 20-20 der Clariant AG oder Pluriol^{®} A 010 R, Pluriol^{®} A 11 RE, Pluriol^{®} A 13 R, Pluriol^{®} A 22 R oder Pluriol^{®} A 23 R der BASF AG, Vinylpolyether wie beispielsweise Polyglykol V 500, Polyglykol V 1100 oder Polyglykol V 5500 der Clariant AG, Methanol gestartete Polyoxyethylenmonoalkohole wie beispielsweise Pluriol^{®} A 350 E, Pluriol^{®} A 500 E, Pluriol^{®} A 750 E, Pluriol^{®} A 1020 E, Pluriol^{®} A 2000 E oder Pluriol^{®} A 5010 E der BASF AG, Alkanol gestartete Polyoxypropylenmonoalkohole wie beispielsweise Polyglykol B01 / 20, Polyglykol B01 / 40, Polyglykol B01 / 80, Polyglykol B01 / 120 oder Polyglykol B01 / 240 der Clariant AG oder Pluriol^{®} A 1350 P oder Pluriol^{®} A 2000 P der BASF AG, und mit verschiedenen Fettalkoholen gestarteten Polyalkoxylate mit variablem Alkoxylierungsgrad, wie sie dem Fachmann unter den Handelsnamen Lutensol^{®} A, Lutensol^{®} AT, Lutensol^{®} AO, Lutensol^{®} TO, Lutensol^{®} XP, Lutensol^{®} XL, Lutensol^{®} AP und Lutensol^{®} ON der BASF AG bekannt sind. Bevorzugt werden Polyoxyalkylenmonoalkohole verwendet, die Ethylenoxid- und/oder Propylenoxid- und/oder Butylenoxidgruppen enthalten und gegebenenfalls mit Styroloxid modifiziert sind. Besonders bevorzugt ist die Verwendung von Polyoxyalkylenmonoalkoholen wie beispielsweise Polyglykol B 11/50, Polyglykol B 11/70, Polyglykol B 11/100, Polyglykol B 11/150, Polyglykol B 11/300 oder Polyglykol B 11/700 von der Clariant AG, Pluriol^{®} A 1000 PE, Pluriol^{®} A 1320 PE, oder Pluriol^{®} A 2000 PE der BASF AG oder Terralox WA 110 von DOW Chemicals, bei denen es sich um Butanol gestartete Polyoxyalkylene aus Ethylen- und Propylenoxid mit einer terminalen OH-Gruppe handelt.

Ebenfalls Gegenstand der vorliegenden Erfindung ist ein Verfahren zur Herstellung des erfindungsgemäßen Netz- und Dispergiermittels. Dabei werden zunächst in einem ersten Schritt ein gegebenenfalls wie oben beschrieben modifiziertes Aminogruppen-haltiges organisches Polymer (a) und mindestens eine gegebenenfalls wie oben beschrieben modifizierte verzweigte Polyhydroxymonocarbonsäure (b) durch Kondensationsreaktionen unter Bildung von Amidbindungen umgesetzt (Schritt (1)). In Schritt (2) folgt dann die Umsetzung zumindest eines Teils der Hydroxygruppen des unter Schritt (1) erhaltenen hydroxyfunktionellen Reaktionsprodukts enthaltend eine Aminogruppen-haltige organische Polymereinheit sowie Polyestereinheiten, welche gegebenenfalls hochverzweigten Charakter haben, mit mindestens einem organischen Monoisocyanat unter Bildung von Urethanbindungen, wodurch das erfindungsgemäße Netz- und Dispergiermittel entsteht.

Vorzugsweise wird das Aminogruppen-haltige organische Polymer (a) in wie oben beschriebener modifizierter Form eingesetzt. Dies bedeutet insbesondere, dass das Aminogruppen-haltige organische Polymer (a) beziehungsweise zumindest ein Anteil der darin enthaltenen primären und/oder sekundären Aminogruppen vor der Umsetzung mit der mindestens einen Polyhydroxymonocarbonsäure (b) gemäß Schritt (1) wie weiter oben beschrieben mit Lactonen, alkylsubstituierten Lactonen und/oder Monohydroxymonocarbonsäuren umgesetzt wird.

Bevorzugt ist zudem der Einsatz von wie oben beschriebenen modifizierten Polyhydroxymonocarbonsäuren (b), wobei die mindestens eine Polyhydroxymonocarbonsäure (b) unter Bildung von Esterbindungen mit Monomeren ausgewählt aus der Lactone, alkylsubstituierten Lactone und Monohydroxymonocarbonsäuren umgesetzt wird.

Geeignete Reaktionsbedingungen für die entsprechenden Reaktionen, beispielsweise den Kondensationsreaktionen in Schritt (1) und (2) sind bereits weiter oben angegeben. Detaillierte Informationen sind zudem den unten angegebenen Ausführungsbeispielen zu entnehmen. Insbesondere sind bei den Kondensationsreaktionen Temperaturen im Bereich von etwa 50°C bis 200°C, bei den ringöffnenden Polymerisationsverfahren von Lactonen im Bereich von etwa 70°C bis 200°C zu wählen. Gegebenenfalls kommen noch geläufige Katalysatoren wie Säuren (insbesondere bei den Kondensationsreaktionen) zum Einsatz. Auch zum Einsatz kommen metallorganische Verbindungen wie beispielsweise Dibutylzinndilaurat insbesondere bei den Lactonpolymerisationen.

Ein weiterer Gegenstand der vorliegenden Erfindung ist die Verwendung des erfindungsgemäßen Netz- und Dispergiermittels in pigmentierten und/oder Füllstoff- haltigen Produkten, beispielsweise Pigmentkonzentraten, Beschichtungszusammensetzungen, Dichtstoffen und/oder Kunststoffen, vorzugsweise in Beschichtungszusammensetzungen, beispielsweise Lacken sowie Pigmentkonzentraten für Beschichtungszusammensetzungen wie Lacken. Ganz besonders bevorzugt sind Pigmentkonzentrate, die mit entsprechenden Auflacksystemen gemischt werden können, wodurch pigmentierte Lacke hergestellt werden.

Ein weiterer Gegenstand der vorliegenden Erfindung ist auch ein pigment- und/oder füllstoffhaltiges Produkt ausgewählt aus der Gruppe der Pigmentkonzentrate, Beschichtungszusammensetzungen, Dichtstoffe und Kunststoffe, welches mindestens ein erfindungsgemäßes Netz- und Dispergiermittel enthält.

Die erfindungsgemäß bevorzugten, Pigment- und/oder Füllstoff-haltigen Konzentrate enthaltend mindestens ein erfindungsgemäßes Netz- und Dispergiermittel können nicht nur in den schon genannten Auflacksystemen für pigmentierte Lacke eingesetzt werden. Ebenfalls möglich ist der Einsatz in einem weiten Bereich von Formulierungen bzw. Produkten, wie beispielsweise Harzen, Ölen, Fetten, Gleitmitteln, Gummimaterialien, Dichtstoffen, Druckfarben, Tinten, Klebstoffen, Wachsen oder Beschichtungsmittelzusammensetzungen. Die Konzentrate können auch in Formulierungen, die in der Körperpflegeindustrie hergestellt werden, eingesetzt werden oder in elektrischen Anwendungen in der Elektronikindustrie, in der Schiffsindustrie, im Rahmen medizinischer Anwendungen, in der Bauindustrie oder in der Automobilindustrie. Beispiele schließen kosmetische Präparate, elektronisches Papier, wie zum Beispiel das Display bei Ebooks, die Verkapselung mikroelektronischer Chips, Unterwasserbootshautbeschichtungen, wie beispielsweise Anti-Fouling-Beschichtungen, Silikonröhren oder Gleitadditive für Bremskomponenten ein. Zu nennen sind ebenfalls die Anwendungsbereiche NIP (Non impact printing), InkJet (auf Papier, Folie, Keramik, künstlichem und natürlichem Fasergewebe), Dispergieren von Keramik (wässrig oder wasserfrei), Dispergieren in Epoxy-Vergussmassen. Das erfindungsgemäße Netz- und Dispergiermittel kann auch selbst, das heißt ohne zuvor in ein entsprechendes Konzentrat eingearbeitet worden zu sein, in den zuvor genannten Formulierungen und Anwendungsbereichen zum Einsatz kommen.

Bevorzugt ist das pigment- und/oder füllstoffhaltige Produkt enthaltend mindestens ein erfindungsgemäßes Netz- und Dispergiermittel eine Beschichtungszusammensetzung, beispielsweise ein Lack, oder ein Pigmentkonzentrat für Beschichtungszusammensetzungen wie Lacken. Letztlich aber ist der Einsatz in beliebigen pigmenthaltigen und/oder Füllstoffhaltigen Produkten möglich.

Insbesondere handelt es sich bei den Pigmentkonzentraten um Zusammensetzungen, die neben dem erfindungsgemäßen Netz- und Dispergiermittel beispielsweise organische Lösemittel und mindestens ein Pigment enthalten. Sie enthalten insbesondere keine oder nur geringe Anteile organischer Polymere als Bindemittel. Solche dem Fachmann bekannten Bindemittel sind vorteilhafterweise in den entsprechenden Auflacksystemen vorhanden und werden weiter unten beschrieben.

Als organische Lösemittel kommen die typischen im Bereich der Lack- und Farbindustrie eingesetzten, dem Fachmann bekannten organischen Lösemittel, wie beispielsweise, aber nicht ausschließlich, aliphatische Lösemittel, cycloaliphatische Lösemittel, aromatische Lösemittel wie Toluol, Xylol, Solventnaphtha, typische Ether, Ester und/oder Ketone wie beispielsweise Butylglykol, Butyldiglykol, Butylacetat, Methylisobutylketon, Methylethylketon und/oder Lösemittel wie Methoxypropylacetat, Diacetonalkohol zum Einsatz.

Als Pigmente kommen die dem Fachmann bekannten Pigmente zu Einsatz. Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan, Xanthen-, Acridin-, Chinacridon-, Methin-Pigmente, Anthrachinon, Pyranthron-, Perylen- und andere polycyclische Carbonyl-Pigmente, anorganische Pigmente wie Carbon Black Pigmente und/oder Pigmente auf Basis von Russ, Graphit, Zink, Titandioxid, Zinkoxid, Zinksulfid, Zinkphosphat, Bariumsulfat, Lithopone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismut-vanadat-molybdatgelb oder Chromtitangelb), magnetischen Pigmenten auf Basis von Reineisen, Eisenoxiden und Chromoxiden oder Mischoxyden, Metalleffektpigmente aus Aluminium, Zink, Kupfer oder Messing sowie Perlglanzpigmente, fluoreszierende und phosphoreszierende Leuchtpigmente. Weitere Beispiele sind nanoskalige organische oder anorganische Feststoffe mit Teilchengrößen unterhalb von 100 nm wie bestimmte Russtypen oder andere allotrope Formen des Kohlenstoffs wie swCNT's, mwCNT's und Graphen. Die Bestimmung der Teilchengröße erfolgt beispielsweise mittels Transmissionselektronenmikroskopie, analytischer Ultrazentrifugation oder Methoden der Lichtstreuung. Ebenfalls zu nennen sind Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (beispielsweise durch Vermahlung) oder Flammhydrolyse und ähnlichem erfolgen.

Enthalten die jeweiligen Produkte, insbesondere die Beschichtungszusammensetzungen, Füllstoffe, so handelt es sich beispielsweise um die dem Fachmann bekannten Füllstoffe. Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126. Auch Flammschutzmittel wie beispielsweise Aluminium- oder Magnesiumhydroxid und Mattierungsmittel wie beispielsweise Kieselsäuren lassen sich ebenfalls hervorragend durch die erfindungsgemäßen Netz- und Dispergiermittel dispergieren und stabilisieren.

Je nach Einsatzgebiet werden die erfindungsgemäßen Netz- und Dispergiermittel in solchen Mengen eingesetzt, dass in dem letztlich für die weitere Anwendung interessanten Produkt vorteilhaft ein Anteil des erfindungsgemäßen Netz- und Dispergiermittels von 0,01 bis 10 Gew.-%, bezogen auf die Gesamtmenge des jeweiligen Produkts, besteht. Möglich sind aber auch höhere Anteile. Ist beispielsweise das für die weitere Anwendung interessante Produkt eine pigmentierte Beschichtungszusammensetzung beziehungsweise ein pigmentierter Lack und wird das erfindungsgemäße Netz- und Dispergiermittel in einem Pigmentkonzentrat eingesetzt, das später für die Herstellung des Lacks verwendet wird, so wird der Anteil des erfindungsgemäßen Netz- und Dispergiermittels in dem Konzentrat entsprechend größer sein als in der herzustellenden pigmentierten Beschichtungszusammensetzung. Von Bedeutung dabei ist beispielsweise in welchem Verhältnis das Pigmentkonzentrat und das Auflacksystem vermischt werden.

Bezogen auf den zu dispergierenden Feststoff, beispielsweise das Pigment, wird das erfindungsgemäße Netz- und Dispergiermittel in einer Menge von bevorzugt 0,5 bis 100 Gew.-% eingesetzt. Werden schwierig zu dispergierende Feststoffe verwendet, kann die Menge an eingesetztem erfindungsgemäßen Netz- und Dispergiermittel durchaus höher sein. Die Menge an Dispergiermittel ist im Allgemeinen abhängig von der zu belegenden Oberfläche des zu dispergierenden Stoffes. Von Bedeutung kann also beispielsweise sein, um welches Pigment es sich handelt. Allgemein lässt sich sagen, dass zur Dispergierung anorganischer Pigmente meist weniger Dispergiermittel notwendig ist als für organische Pigmente, da letztere meist über eine höhere spezifische Oberfläche verfügen und von daher eine größere Menge an Dispergiermittel nötig ist. Typische Dosierungen des Netz- und Dispergiermittels für anorganische Pigmente liegen beispielsweise bei 1 bis 20 Gew.-%, für organische Pigmente bei 10 bis 50 Gew.-%, jeweils bezogen auf den zu dispergierenden Feststoff, insbesondere das Pigment. Bei sehr feinteiligen Pigmenten (beispielsweise einigen Rußen) sind auch Zugabemengen von 30 bis 90% oder mehr nötig. Als Kriterien für eine ausreichende Pigmentstabilisierung können beispielsweise Glanz und Transparenz der Beschichtungszusammensetzungen oder der Grad des Ausschwimmens herangezogen werden. Die Dispergierung der Feststoffe kann als Einzelanreibung erfolgen oder auch als Gemischanreibung mit mehreren Pigmenten gleichzeitig, wobei die besten Ergebnisse in der Regel bei Einzelanreibungen zu erreichen sind. Bei der Verwendung von Mischungen verschiedener Feststoffe kann es durch gegensätzliche Ladungen auf den Feststoffoberflächen verstärkt zu Agglomerationen in der flüssigen Phase kommen.

Die Produkte, insbesondere die Beschichtungszusammensetzungen beziehungsweise Lacke, in denen die erfindungsgemäßen Netz- und Dispergiermittel letztlich ihre Wirkungen entfalten sollen, können zudem ein organisches Polymer als Bindemittel enthalten. Solche Bindemittel sind dem Fachmann bekannt und werden unter anderem in einer nicht abschließenden Aufzählung in Römpp Lacke und Druckfarben, Georg Thieme Verlag, Stuttgart New York, 1998, Seiten 73 bis 74 beschrieben. Dieses mindestens eine Bindemittel kann beispielsweise über ein Auflacksystem eingeführt werden, welches beispielsweise mit einem Pigmentkonzentrat, enthaltend das erfindungsgemäße Netz- und Dispergiermittel, gemischt wird, sodass es sich bei dem betrachteten Produkt um einen pigmentierten Lack handelt. Möglich sind aber auch andere pigmentierte und/oder füllstoffhaltige Produkte, beispielsweise Kunststoffe, Dichtstoffe und weitere, dem Fachmann bekannte Produkte auf Basis einer organischen polymeren Matrix. Als Produkt wird im Rahmen der vorliegenden Erfindung ein System bezeichnet, welches ein polymeres Harz beziehungsweise organisches Polymer als Bindemittel enthält und dadurch in der Lage ist unter geeigneten Härtungsbedingungen eine feste organische, polymere Matrix zu bilden (beispielsweise eine Beschichtungszusammensetzung). Ebenfalls als Produkt wird ein System bezeichnet, dass durch einfache Vermischung mit einer Komponente, welche ein Bindemittel enthält, zur Bildung einer solchen organischen, polymeren Matrix fähig ist (beispielsweise ein Pigmentkonzentrat). Zum Einsatz kommen beispielsweise, aber nicht ausschließlich, die dem Fachmann bekannten Alkydharze, Polyesterharze, Acrylatharze, Polyurethanharze und/oder Epoxidharze. Möglich sind sowohl 1-Komponentensysteme als auch 2-Komponentensysteme, wobei in letzterem Fall in der Regel noch beispielsweise Polyisocyanate, Melaminharze und/oder Polyamidharze als die typischen, dem Fachmann geläufigen Vernetzungsmittel in einer zweiten Komponente vorhanden sind. Bevorzugt sind im Rahmen der vorliegenden Erfindung Produktssysteme, insbesondere Beschichtungszusammensetzungen, die eine Acrylatharz als Bindemittel enthalten. In einer weiteren Ausführungsform der Erfindung handelt es sich um eine 2-Komponenten (2K) Beschichtungszusammensetzung beziehungsweise einen 2K-Lack, der ein Epoxidharz in der Bindemittelkomponente und ein Polyamidharz in der Vernetzerkomponente enthält.

Die als Produkte bevorzugten Beschichtungszusammensetzungen können wasserbasierend oder lösemittelbasierend, vorzugsweise lösemittelbasierend sein. Im Rahmen der vorliegenden Erfindung ist unter wasserbasierend zu verstehen, dass die Beschichtungszusammensetzung als Lösemittel hauptsächlich Wasser enthält. Insbesondere sind bei einer wasserbasierenden Beschichtungszusammensetzung nicht mehr als 10 Gew.-% organische Lösemittel, bezogen auf die Gesamtmenge an Lösemitteln, in der Beschichtungszusammensetzung enthalten. Als lösemittelbasierend gilt im Rahmen der vorliegenden Erfindung eine Beschichtungszusammensetzung, die nicht mehr als 5 Gew.-%, bevorzugt nicht mehr als 2 Gew.-% Wasser, bezogen auf die Gesamtmenge an Lösemitteln enthält. Natürlich kann die Beschichtungszusammensetzung auch im Vergleich zu den oben angegebenen Anteilen, die den wasserbasierenden oder lösemittelbasierenden Charakter begründen, ausgewogenere Anteile beziehungsweise Verhältnisse von organischen Lösemitteln und Wasser enthalten.

Natürlich können die Produkte, insbesondere die Pigmentkonzentrate und Beschichtungszusammensetzung enthaltend mindestens ein erfindungsgemäßes Netz- und Dispergiermittel, auch noch weitere typische und dem Fachmann bekannte Zusatzstoffe enthalten. Im Rahmen der bevorzugten Beschichtungszusammensetzungen handelt es sich dabei beispielsweise um Photoinitiatoren, Entschäumer, Netzmittel, filmbildende Hilfsmittel wie CelluloseDerivate (beispielsweise Cellulosenitrate, Celluloseacetate, Celluloseacetobutyrat), Reaktivverdünner, Verlaufmittel, Dispergiermittel, und/oder rheologiesteuernde Additive.

Die Herstellung der als Produkte bevorzugten Pigmentkonzentrate und Beschichtungszusammensetzung erfolgt über die dem Fachmann geläufigen Verfahren und weist keine Besonderheiten auf. Es kommen die bekannten Methoden zum Einsatz, wie beispielsweise die schrittweise Zugabe unter Rühren und Vermischung der Bestandteile der Beschichtungszusammensetzung in üblichen und bekannten Mischaggregaten wie Rührkessel oder Dissolver.

Unter Verwendung der bevorzugten Pigmentkonzentrate und Beschichtungszusammensetzungen können natürlich Beschichtungen beziehungsweise Lackschichten hergestellt werden. Die Herstellung der Beschichtung erfolgt über die dem Fachmann geläufigen Applikationstechniken auf ein Substrat und anschließende Härtungsverfahren.

Die Applikation erfolgt beispielsweise durch die bekannten Spritz-, Sprüh-, Streich-, Roll-, Giess-, Tränk- und/oder Tauchverfahren. Nach der Applikation der Beschichtungszusammensetzung auf ein Substrat erfolgt die Härtung beziehungsweise Trocknung nach gängigen Methoden. Beispielsweise kann die applizierte Beschichtungszusammensetzung physikalisch trocknend, thermisch und/oder unter Anwendung aktinischer Strahlung (strahlenhärtend), vorzugsweise UV-Strahlung sowie Elektronenstrahlung härtbar sein. Die thermische Härtung kann beispielsweise im Bereich von etwa 10°C bis etwa 400°C, je nach Art der Beschichtungszusammensetzung und/oder des Substrats, erfolgen. Auch die Dauer der Härtung ist individuell beispielsweise von der Art des Härtungsverfahrens (thermisch oder aktinisch), der Art der eingesetzten Beschichtungsusammensetzung und/oder den Substraten abhängig. Beispielsweise kann die Härtung zwischen 1 Minute und mehreren Stunden oder sogar Tagen andauern. Dabei kann das Substrat bewegt werden oder auch ruhen. Die Härtungsbedingungen können vom Fachmann problemlos auf Basis seines Fachwissens je nach Einzelfall angepasst werden.

In der Folge wird anhand von Ausführungsbeispielen gezeigt, dass die erfindungsgemäßen Netz- und Dispergiermittel eine hervorragende dispergierende Wirkung in pigmentierten Beschichtungssystemen beziehungsweise Lacken aufweisen, sodass vorteilhafte Eigenschaften wie eine gute Lagerstabilität, ein hoher Glanz und/oder ein nur geringer Glanzschleier resultieren. Es wird eine gute Balance dieser Eigenschaften erreicht. Im Vergleich zu herkömmlichen Netz- und Dispergiermitteln wird die Breitenanwendbarkeit zur Verwendung in unterschiedlichen Beschichtungssystemen verbessert.

### Ausführungsbeispiele

### Vorbemerkungen:

Bei molekular uneinheitlichen Substanzen stellen die angegebenen Molekulargewichte - im Folgenden wie schon in der vorstehenden Beschreibung-Durchschnittswerte des Zahlenmittels dar. Die Molekulargewichte beziehungsweise zahlenmittleren Molekulargewichte Mₙ werden bei Vorhandensein bestimmbarer funktioneller Endgruppen wie Hydroxy-, NCO-, Amino- oder Säuregruppen durch Endgruppenbestimmung über die Ermittlung von OH-Zahl, NCO-Zahl, Aminzahl bzw. Säurezahl durch Titration ermittelt. Bei Verbindungen, auf die eine Endgruppenbestimmung nicht anwendbar ist, wird das zahlenmittlere Molekulargewicht mittels Gelpermeationschromatographie gegen einen Polystyrolstandard bestimmt. Bei den Polyaminen angegebene Molekulargewichte sind ebullioskopisch bestimmte Zahlenmittel Mₙ.

Sofern nicht anders ausgeführt, handelt es sich bei Angaben in Teilen um Gewichtsteile und bei Angaben in Prozenten um Gewichtsprozente.

Der freie NCO-Gehalt der zum Einsatz kommenden Polyisocyanate sowie der Reaktionsverlauf der NCO-Additionen wird nach EN ISO 9369 durch Abreaktion mit Butylamin und anschließende Titration des Aminüberschusses bestimmt. Diese Methoden sind auch beschrieben bei Saul Patai "The Chemistry of Cyanates and their Thioderivates", Part 1, Chapter 5, 1977.

### Synthese von modifizierten Polyhydroxymonocarbonsäuren (b):

Die modifizierten organischen Polyhydroxymonocarbonsäuren (b) 1 bis 7 wurden gemäß folgender allgemeiner Synthesevorschift dargestellt:

Eine nicht modifizierte Polyhydroxymonocarbonsäure, ε-Caprolacton und gegebenenfalls δ-Valerolacton wurden mit Dibutylzinndilaurat (200 ppm) versetzt und unter Schutzgas so lange bei 170 °C gerührt, bis der Anteil nichtflüchtiger Anteile (2,0 ± 0,1 g Prüfsubstanz, Doppelbestimmung, 10 Minuten, 150 °C; EN ISO 3251) einen Wert von 98 % überschritt. Die jeweils eingesetzten Verbindungen und deren Mengen sind in Tabelle 1 wiedergegeben. Die Produkte wurden als farblose bis leicht gelbliche Flüssigkeiten erhalten, von denen einige bei Lagerung wachsartig fest werden können.

**Tabelle 1:**

| | Eingesetzte (nicht modifizierte) Polyhydroxycarbonsäure | Menge | Menge ε-Caprolacton | Menge δ-Valerolacton |
|---|---|---|---|---|
| **(b) 1** | 2,2-Bis(hydroxymethyl)-propionsäure | 100 g | 170,17 g | |
| **(b) 2** | 2,2-Bis(hydroxymethyl)-propionsäure | 100 g | 170,17 g | 74,64 g |
| **(b) 3** | 2,2-Bis(hydroxymethyl)-propionsäure | 100 g | 255,26 g | 74,64 g |
| **(b) 4** | 2,2-Bis(hydroxymethyl)-propionsäure | 100 g | 340,00 g | |
| **(b) 5** | 2,2-Bis(hydroxymethyl)-propionsäure | 100 g | 425,43 g | |
| **(b) 6** | 2,2-Bis(hydroxymethyl)-propionsäure | 100 g | 425,43 g | 149,29 g |
| **(b) 7** | 2,2-Bis(hydroxymethyl)-propionsäure | 100 g | 850,56 g | |
| **(b) 8** | 2,2-Bis(hydroxymethyl)-buttersäure | 100g | 385,21 g | |

### Synthese von modifizierten Aminogruppen-haltigen organischen Polymeren (a):

Die modifizierten Aminogruppen-haltigen organischen Polymere (a) 1 bis 4 wurden gemäß folgender allgemeiner Synthesevorschift dargestellt:

Ein nicht modifiziertes Aminogruppen-haltiges organisches Polymer (a), ε-Caprolacton und gegebenenfalls δ-Valerolacton wurden mit Dibutylzinndilaurat (200 ppm) versetzt und unter Stickstoff so lange bei 170 °C gerührt, bis der Anteil nichtflüchtiger Anteile (2,0 ± 0,1 g Prüfsubstanz, Doppelbestimmung, 10 Minuten, 150 °C; EN ISO 3251) einen Wert von 98 % überschritt. Die Produkte wurden als gelbe bis hellbraune Flüssigkeiten erhalten, von denen einige bei Lagerung wachsartig fest werden können.

Die jeweils eingesetzten Verbindungen und deren Mengen sind in Tabelle 2 wiedergegeben.

**Tabelle 2:**

| modifiziertes Aminogruppen-haltiges Polymer A | Polyamin (nichtmodifiziertes A)¹ | Menge | Menge ε-Caprolacton | Menge δ-Valerolacton |
|---|---|---|---|---|
| **(a) 1** | Epomin SP 200 | 1,0 g | 9.4 g | |
| **(a) 2** | Epomin SP 003 | 1,0 g | 26.7 g | |
| **(a) 3** | Epomin SP 018 | 1,0 g | 26.7 g | |
| **(a) 4** | Epomin SP 018 | 1,0 g | 22.7 g | 4.1 g |

| | | | | |
|---|---|---|---|---|
| ¹ Epomin: Aziridinhomopolymere (Polyethylenimin-Polymere) (Fa. Nippon Shokubai). | | | | |

### Synthese von organischen Monoisocyanaten enthaltend eine Isocyanatgruppe:

Die organischen Monoisocyanate (R-NCO) 1 bis 9 wurden gemäß folgender allgemeiner Synthesevorschift aus Diisocyanaten und Monoalkoholen dargestellt: Das Diisocyanat (mindestens 1,0 mol, typischerweise 2,0 bis 10,0 mol, vergleiche Tabelle 3) wird unter Stickstoff vorgelegt und der trockene (Wassergehalt nach Karl Fischer < 0,1 %) Monoalkohol (1,0 mol) wird langsam zugetropft, so dass die Reaktionstemperatur 60 °C nicht überschreitet. Nach beendeter Zugabe wird so lange bei 60 °C nachgerührt, bis die NCO-Zahl des Produktes sich über einen Zeitraum von 30 Minuten nicht signifikant ändert.

Bei Einsatz eines Überschusses an Diisocyanat wird nach beendeter Reaktion der verbliebene Überschuss an Diisocyanat destillativ durch den Einsatz eines Dünnschicht- oder Kurzwegverdampfers entfernt.

Die jeweils eingesetzten Diisocyanate und Monoalkohole sowie deren Molverhältnisse sind in Tabelle 3 wiedergegeben.

**Tabelle 3:**

| Monoisocyanat | Diisocyanat | Monoalkohol | Molverhältnis Diisocyanat/Monoalkohol |
|---|---|---|---|
| **(R-NCO) 1** | Desmodur T 100 | Polyglycol B 01/40 | 2,5 : 1 |
| **(R-NCO) 2** | Desmodur T 100 | Polyglycol B01/120 | 2 : 1 |
| **(R-NCO) 3** | Desmodur T 80 | Polyglycol B11/50 | 10 : 1 |
| **(R-NCO) 4** | Desmodur T 100 | Polyglycol B11/70 | 10 : 1 |
| **(R-NCO) 5** | Desmodur T 80 | MPEG 350 | 5 : 1 |
| **(R-NCO) 6** | Desmodur T 80 | MPEG 500 | 5 : 1 |
| **(R-NCO) 7** | Desmodur T 100 | DCPE1100 | 4 : 1 |
| **(R-NCO) 8** | Desmodur T 100 | MCVPE1500 | 4 : 1 |
| **(R-NCO) 9** | Desmodur T 100 | 12-Hydroxystearinsäure | 5 : 1 |

| | | | |
|---|---|---|---|
| Desmodur T 100: 2,4-Toluylendiisocyanat (Fa. Bayer), Desmodur T 80: 2,4- und 2,6-Toluylendiisocyanat im Verhältnis von 80 : 20 (Fa. Bayer), MPEG 350/500: Methoxypolyethylenglykol, Mₙ: 350/500, Polyglycol B01/40: Butanolgestarteter PO-Polyether, Mₙ = 1100, Fa. Clariant,. Polyglycol B01/120: Butanolgestarteter PO-Polyether, Mₙ = 2000, Fa. Clariant, Polyglycol B11/50: Butanolgestarteter EO/PO-Polyether(1:1), Mₙ = 1700, Fa. Clariant, Polyglycol B11/70: Butanolgestarteter EO/PO-Polyether (1:1), Mₙ = 2000, Fa. Clariant, DCPE1100: Decanolgestarteter Monohydroxyfunktioneller ε-Caprolactonpolyester, Mₙ 1100, MCVPE1500: Monohydroxyfunktioneller Polyester aus Methoxypolyethylenglykol Mₙ 500, ε-Caprolacton und δ-valerolacton (Molverhältnis 1:7:2), Mₙ 1500. | | | |

### Synthese von erfindungsgemäßen Netz- und Dispergiermitteln:

Aminogruppen-haltige organische Polymere (a), Polyhydroxymonocarbonsäuren (b) sowie organische Monoisocyanate wurden im nächsten Schritt gemäß folgender allgemeiner Arbeitsvorschrift zu Netz- und Dispergiermitteln umgesetzt:

Das gegebenenfalls modifizierte polyaminische Material (a) wurde unter Stickstoff auf 180 °C erhitzt und die jeweilige gegebenenfalls modifizierte Polyhydroxymonocarbonsäure (b) portionsweise zugegeben. Der Ansatz wurde bei dieser Temperatur gerührt, bis die Säurezahl (SZ gemäß DIN 53402) einen Wert kleiner 10 mg KOH /g Substanz erreichte. Während der Umsetzung wurde das entstehende Reaktionswasser bei der gewählten Reaktionstemperatur abdestilliert und in einem Wasserabscheider aufgefangen.

Anschließend wurde die Hydroxylzahl (gemäß DIN / ISO 4629) des resultierenden Produktes bestimmt und die Hydroxygruppen anteilig mit dem jeweiligen Monoisocyanat bei einer Temperatur von 60 °C unter Stickstoff umgesetzt.

Die erfindungsgemäßen Netz- und Dispergiermittel wurden als hochviskose, hellbraune Öle erhalten.

Die jeweils eingesetzten Verbindungen sowie deren Mengen sind in Tabelle 4 wiedergegeben.

**Tabelle 4:**

| Bsp. | Polyamin (a) | Menge (a) | Polyhydroxy-monocarbonsäure (b) | Menge (b) | SZ | Organisches Monoisocyanat | Umsetzungs grad der OH-Gruppen in mol-% |
|---|---|---|---|---|---|---|---|
| | | | | | | | |
| 1 | Epomin SP 200 | 1,0 g | 2,2-Bis-(hydroxymethyl)-propionsäure | 13,7 g | 8.2 | (R-NCO) 5 | 5 |
| 2 | Epomin SP 018 | 1,0 g | (b) 1 | 24,2 g | 9,7 | (R-NCO) 9 | 10 |
| 3 | Epomin SP 200 | 6,5 g | (b) 2 | 59,0 g | 7,4 | (R-NCO) 3 | 45 |
| 4 | Epomin SP 003 | 6,5 g | (b) 2 | 59,0 g | 8,9 | (R-NCO) 4 | 45 |
| 5 | Epomin SP 200 | 1,2 g | (b) 3 | 59,0 g | 6,1 | (R-NCO) 1 | 50 |
| 6 | Epomin SP 200 | 0,9 g | (b) 4 | 59,0 g | 8,8 | (R-NCO) 1 | 95 |
| 7 | Lupasol WF¹ | 1,5 g | (b) 3 | 59,0 g | 6,8 | (R-NCO) 1 | 45 |
| 8 | Lupasol WF | 2,5 g | (b) 5 | 59,0 g | 9,7 | (R-NCO) 3 | 25 |
| 9 | Epomin SP 200 | 1,0 g | (b) 6 | 50,0 g | 6,4 | (R-NCO) 1 | 50 |
| 10 | Lupasol WF | 1,0 g | (b) 7 | 100 g | 9,1 | (R-NCO) 3 + (R-NCO) 4 | 30 + 30 |
| 11 | Epomin SP 018 | 1,2 g | (b) 7 | 59,0 g | 7,6 | (R-NCO) 7 | 30 |
| 12 | Epomin SP 018 | 1,5 g | (b) 8 | 118 g | 9,8 | (R-NCO) 8 | 25 |
| 13 | (a) 1 | 1,5 g | (b) 2 | 118 g | 9,8 | (R-NCO) 5 | 10 |
| 14 | (a) 2 | 6,5 g | (b) 2 | 59,0 g | 4,1 | (R-NCO) 5 + (R-NCO) 6 | 10+5 |
| 15 | (a) 2 | 6,5 g | (b) 3 | 59,0 g | 7,7 | (R-NCO) 1 | 40 |
| 16 | (a) 3 | 1,0 g | (b) 5 | 52,7 g | 6,8 | (R-NCO) 2 | 75 |
| 17 | (a) 4 | 1,0 g | (b) 7 | 52,7 g | 9,6 | (R-NCO) 8 | 25 |

| | | | | | | | |
|---|---|---|---|---|---|---|---|
| ¹ Lupasol WF : Aziridinhomopolymer (Polyethylenimin-Polymer) (Fa. BASF). | | | | | | | |

Zusätzlich wurden aus WO2008/037612 Beispielverbindungen (vergleichende Netzund Dispergiermittel) hergestellt und wie unten beschrieben anwendungstechnisch untersucht. Die hergestellten vergleichenden Netz- und Dispergiermittel wurden als tiefschwarze Feststoffe erhalten. Es zeigte sich, dass die als Verbindung 58 bezeichnete Substanz aus den in WO2008/037612 angegebenen Beispielen die besten anwendungstechnischen Ergebnisse liefert. Diese Verbindung wurde daher als Referenzmaterial bei der Prüfung der erfindungsgemäßen Netz- und Dispergiermittel mituntersucht.

Die Herstellung des Referenzmaterials erfolgte nach der folgenden Arbeitsvorschrift: 0,9 g Epomin SP 200 wurden auf 180 °C erhitzt und 59,0 g Intermediat (b) 4 wurden portionsweise zugegeben. Die Mischung wurde bei 180 °C so lange gerührt, bis die Säurezahl des Produktes einen Wert von 9,9 erreichte. Entstehendes Reaktionswasser wurde abdestilliert. Anschliessend wurden 16,0 g Laurinsäure zugegeben und bei 180 °C 30 Stunden gerührt, bis kein Wasser mehr abdestilliert werden konnte. Es wurde ein tiefschwarzer, wachsartiger Feststoff erhalten.

Des Weiteren erfolgte die Herstellung des erfindungsgemäßen Netz- und Dispergiermittels 18 gemäß folgender Arbeitsvorschrift:

0,9 g Epomin SP 200 wurde auf 180 °C erhitzt und 59,0 g Intermediat (b) 4 wurden portionsweise zugegeben. Die Mischung wurde bei 180 °C so lange gerührt, bis die Säurezahl des Produktes einen Wert von 9,9 erreichte. Entstehendes Reaktionswasser wurde abdestilliert. Anschliessend wurde auf 70 °C abgekühlt und 16,88 g Laurylisocyanat wurden zugegeben. Der Ansatz rührte 3 Stunden, bis kein freies Isocyanat mehr nachgewiesen werden konnte. Es wurde ein hellbrauner, wachsartiger Feststoff erhalten.

Während Referenzverbindung 58 nach vergleichsweise langer Reaktionsdauer als tiefschwarzes Produkt anfällt, lässt sich Verbindung 18 einfacher, schneller und auch in der Farbe heller synthetisieren.

Tabelle 5 zeigt nochmals einen Überblick über das Referenzmaterial sowie das erfindungsgemäße Netz- und Dispergiermittel 18.

**Tabelle 5:**

| Bsp. | Polyamin (a) | Menge (a) | Polyhydroxymonocarbonsäure (b) | Menge (b) | Organischer Rest (c) | Menge (c) |
|---|---|---|---|---|---|---|
| | | | | | | |
| "58" | Epomin SP 200 | 0,9 g | (b) 4 | 59,0 g | Laurinsäure | 16,0 g |
| 18 | Epomin SP 200 | 0,9 g | (b) 4 | 59,0 g | Laurylisocyanat | 16,88 g |

### Anwendungstechnische Untersuchungen:

Einige der Netz- und Dispergiermittel 1 bis 17 wurden anwendungstechnisch untersucht. Dazu wurden wie weiter unten beschrieben verschiedene Pigmentpasten beziehungsweise pigmentierte Beschichtungszusammensetzungen/Lacke unter Einsatz der Netz- und Dispergiermittel hergestellt. Danach wurden die Beschichtungszusammensetzungen beziehungsweise Lacke nach dem Fachmann geläufigen Verfahren auf Polyethylenfolien, Polyesterfolien, Papierkarten, und/oder Glasplatten appliziert und gehärtet beziehungsweise getrocknet.

### Rub-out Test:

Der zu prüfende Lack wurde nach der Herstellung auf eine Folie an einer schrägen Platte (Winkel 60 bis 70 °) appliziert und der Lackfilm bei Raumtemperatur über Nacht getrocknet. Dann erfolgte die Bewertung des Aus- beziehungsweise Aufschwimmverhaltens der Pigmente in den hergestellten Beschichtungsschichten mittels Rub out Test. Bewertet wurde dabei der ΔE-Wert, der sich durch den rub-out Test ergibt (Rub out: Es wird so lange mit dem Finger auf der nicht ausgehärteten Lackfläche gerieben, bis die Farbdifferenz (ΔE) zwischen geriebener und unbehandelter Fläche den größten Wert erreicht hat und diese Farbdifferenz konstant bleibt. Diese Farbdifferenz wird quantitativ gemessen.) Hohe Werte entsprechen einem schlechten Aufschwimmverhalten.

### Weitere anwendungstechnische Untersuchungen:

Es folgte eine visuelle Beurteilung von Beschichtungsschichten. Dazu wurde der jeweils applizierte Lack gehärtet beziehungsweise getrocknet. An den getrockneten Folienaufzüge, also den fertigen Lackfilmen, wurde die Transparenz untersucht (Notensystem 1 bis 6, wobei 1 = Sehr gut, 6 = ungenügend). Ebenfalls untersucht wurden der Glanz (20°Geometrie, hohe Werte entsprechen einem hohen Glanz), der Glanzschleier (niedrige Werte entsprechen einem niedrigen Glanzschleier) sowie die Stippenbildung.

Es wurden zunächst bindemittelfreie Pigmentkonzentrate unter Einsatz einiger der Netz- und Dispergiermittel 1 bis 16 und der als Verbindung 58 bezeichneten Substanz aus WO2008/037612 sowie unter Verwendung der Pigmente Heliogen Blue L7101, Carbon Black FW 200 und Bayferrox 120M und organischen Lösemitteln hergestellt.

(Anreibebedingungen: Dispermat CV bei 40°C mit 1 mm Glasperlen, Gewichtsverhältnis Glasperlen: Pigmentkonzentrat = 1:1, Teflonscheibendurchmesser = 40 mm; Bayferrox 120M: 40 Minuten bei 17 m/s (8.000 rpm), Heliogen Blue L 7101 F: 40 Minuten bei 21 m/s (10.000 rpm), Carbon Black FW 200: 90 Minuten bei 21 m/s (10.000 rpm)).

Die Zusammensetzungen der bindemittelfreien Pigmentkonzentrate waren wie folgt:

Bindemittelfreie Pigmentkonzentrate pigmentiert mit Heliogen Blue L7101 F:

| | Gew.-% |
|---|---|
| Methoxypropylacetat | 65,2 |
| Diacetonalkohol | 7,3 |
| Netz- und Dispergiermittel (100 % Fest) | 7,5 |
| Heliogen Blue L7101F¹ | 20,0 |

| | |
|---|---|
| ¹ BASF | |

Bindemittelfreie Pigmentkonzentrate pigmentiert mit Carbon Black FW 200:

| | Gew.-% |
|---|---|
| Methoxypropylacetat | 69,7 |
| Diacetonalkohol | 7,8 |
| Netz- und Dispergiermittel (100 % Fest) | 10,5 |
| Carbon Black FW 200¹ | 12,0 |

| | |
|---|---|
| ¹ Evonik | |

Bindemittelfreie Pigmentkonzentrate pigmentiert mit Bayferrox 120M

| | Gew.-% |
|---|---|
| Methoxypropylacetat | 23,9 |
| Diacetonalkohol | 2,7 |
| Netz- und Dispergiermittel (100 % Fest) | 8,1 |
| Pyrogene Kieselsäure (Aerosil R972) | 0,3 |
| Bayferrox 120M¹ | 65,0 |

| | |
|---|---|
| ¹ Lanxess | |

Die bindemittelfreien Pigmentkonzentrate wurden mit unterschiedlichen Auflacksystemen zu pigmentierten Lacken formuliert. Auflacksysteme und Lacke wurden jeweils durch Vermischung der nachfolgend angegebenen Bestandteile erhalten.

Formulierung eines Acrylat-Auflacksystems (Auflacksystem 1):

| | Gew.-% |
|---|---|
| Paraloid B66 (50% in Xylol)¹ | 70,0 |
| DIDP | 2,0 |
| Xylol | 21,8 |
| Methoxypropylacetat | 6,0 |
| BYK-306 | 0,2 |

| | |
|---|---|
| ¹ Acrylatbindemittel (Fa. Rohm and Haas) | |

Formulierung eines Acrylat/Celluloseacetobutyrat (CAB)-Auflacksystems (Auflacksystem 2):

| | Gew.-% |
|---|---|
| Paraloid B66 (50% in Lösemittelmischung*) | 77,8 |
| CAB 381.2 (20% in Lösemittelmischung *)¹ | 11,1 |
| Lösemittelmischung d* | 9,0 |
| BYK-306 | 0,1 |
| DIDP | 2,0 |

| | |
|---|---|
| ¹ Celluloseacetobutyrat (Eastman Chemicals) * Lösemittelmischung: 30 % Xylol, 30 % Butylacetat, 20 % Isopropanol, 20 % Butylglykol | |

### Formulierung der pigmentierten Acrylat / Acrylat-CAB - Lacke

### Acrylat-Lacke:

| | Bayferrox 120M | Heliogen Blue L 7101 F | FW 200 |
|---|---|---|---|
| Auflacksystem 1 | 27,2 | 25,5 | 27,5 |
| Pigmentkonzentrat | 2,8 | 4,5 | 2,5 |
| | | | |

| Einarbeitung der Pigmentkonzentrate für 5 min mittels Scandex-Shaker | | | |
|---|---|---|---|
| Xylol | 3,0 | 3,0 | 3,0 |
| Pigmentgehalt im Lack | 6% | 3% | 1% |

### Acrylat-CAB - Lacke:

| | Bayferrox 120M | Heliogen Blue L 7101 F | FW 200 |
|---|---|---|---|
| Auflacksystem 2 | 27,2 | 25,5 | 27,5 |
| Pigmentkonzentrat | 2,8 | 4,5 | 2,5 |
| | | | |

| Einarbeitung der Pigmentkonzentrate für 5 min mittels Scandex-Shaker | | | |
|---|---|---|---|
| Xylol | 7,5 | 7,5 | 7,5 |
| Pigmentgehalt im Lack | 6% | 3% | 1% |

### Anwendungstechnische Untersuchungen und Eigenschaften:

In den unten stehenden Tabellen sind jeweils das im jeweiligen Pigmentkonzentrat eingesetzte Netz- und Dispergiermittel und das eingesetzte Pigment (vgl. auch obige Zusammensetzungen der Pigmentkonzentrate) sowie das eingesetzte Lacksystem aufgeführt. Ebenfalls angegeben sind die entsprechenden gemessenen anwendungstechnischen Eigenschaften.

### Ergebnisse für Carbon Black FW200 / Acrylat-Lack

| Netz- und Dispergiermittel | Glanz 20 °[GE] | Glanzschleier | Transparenz* (visuell) | Stippenbildung |
|---|---|---|---|---|
| 4 | 68 | 39 | 2 | Keine Stippen |
| 5 | 69 | 47 | 2 | Keine Stippen |
| 6 | 68 | 48 | 2 | Keine Stippen |
| 7 | 78 | 52 | 2 | Keine Stippen |
| 15 | 72 | 58 | 2-3 | Keine Stippen |
| 16 | 64 | 34 | 3 | Keine Stippen |
| 18 | 62 | 58 | 4 | Einige Stippen |
| 58 (Vergleich) | 63 | 61 | 4 | Einige Stippen |

| | | | | |
|---|---|---|---|---|
| * Bewertung nach Noten: 1 = sehr gut, 6 = mangelhaft | | | | |

### Ergebnisse für Heliogen Blue L7101 F / Acrylat-Lack

| Netz- und Dispergiermittel | Glanz 20 °[GE] | Glanzschleier | Transparenz* (visuell) | Stippenbildung |
|---|---|---|---|---|
| 4 | 75 | 21 | 1 | Keine Stippen |
| 5 | 79 | 24 | 1-2 | Keine Stippen |
| 6 | 80 | 22 | 1 | Keine Stippen |
| 7 | 76 | 31 | 1 | Keine Stippen |
| 15 | 80 | 27 | 2 | Keine Stippen |
| 16 | 81 | 19 | 2 | Keine Stippen |
| 18 | 74 | 31 | 3 | Keine Stippen |
| 58 (Vergleich) | 73 | 33 | 3 | Keine Stippen |

| | | | | |
|---|---|---|---|---|
| * Bewertung nach Noten: 1 = sehr gut, 6 = mangelhaft | | | | |

### Ergebnisse für Bayferrox 120M / Acrylat-Lack

| Netz- und Dispergiermittel | Glanz 20 °[GE] | Glanzschleier | ΔE-Werte | Stippenbildung |
|---|---|---|---|---|
| 4 | 52 | 81 | 5,2 | Keine Stippen |
| 5 | 53 | 78 | 4,7 | Keine Stippen |
| 6 | 56 | 74 | 4,4 | Keine Stippen |
| 7 | 56 | 64 | 4,3 | Keine Stippen |
| 15 | 47 | 75 | 4,8 | Keine Stippen |
| 16 | 52 | 72 | 4,3 | Keine Stippen |
| 18 | 49 | 86 | 8,9 | Keine Stippen |
| 58 (Vergleich) | 48 | 89 | 9,1 | Keine Stippen |

### Ergebnisse für Carbon Black FW200 / Acrylat-CAB - Lack

| | Glanz 20 °[GE] | Glanzschleier | Transparenz* (visuell) | Stippenbildung |
|---|---|---|---|---|
| 4 | 69 | 36 | 3 | Keine Stippen |
| 5 | 64 | 48 | 3 | Wenige Stippen |
| 6 | 68 | 47 | 2-3 | Wenige Stippen |
| 7 | 75 | 25 | 2 | Einige Stippen |
| 15 | 78 | 53 | 1-2 | Keine Stippen |
| 16 | 63 | 49 | 1-2 | Keine Stippen |
| 18 | 59 | 78 | 3 | Wenige Stippen |
| 58 (Vergleich) | 58 | 76 | 3 | Wenige Stippen |

| | | | | |
|---|---|---|---|---|
| * Bewertung Nach Noten: 1 = sehr gut, 6 = mangelhaft) | | | | |

### Ergebnisse für Heliogen Blue L7101 F / Acrylat-CAB - Lack

| | Glanz 20 °[GE] | Glanzschleier | Transparenz* (visuell) | Stippenbildung |
|---|---|---|---|---|
| 4 | 79 | 20 | 1-2 | Keine Stippen |
| 5 | 75 | 24 | 1-2 | Keine Stippen |
| 6 | 78 | 23 | 1 | Keine Stippen |
| 7 | 81 | 17 | 2 | Keine Stippen |
| 15 | 76 | 28 | 1 | Keine Stippen |
| 16 | 82 | 33 | 1-2 | Keine Stippen |
| 18 | 78 | 36 | 2 | Keine Stippen |
| 58 (Vergleich) | 74 | 32 | 2 | Keine Stippen |

| | | | | |
|---|---|---|---|---|
| * Bewertung Nach Noten: 1 = sehr gut, 6 = mangelhaft) | | | | |

### Ergebnisse für Bayferrox 120M / Acrylat-CAB - Lack

| | Glanz 20 °[GE] | Glanzschleier | ΔE-Werte | Stippenbild ung |
|---|---|---|---|---|
| 4 | 63 | 68 | 3,8 | Keine Stippen |
| 5 | 59 | 50 | 3,5 | Keine Stippen |
| 6 | 62 | 49 | 3,3 | Keine Stippen |
| 7 | 75 | 63 | 4,0 | Keine Stippen |
| 15 | 68 | 54 | 3,3 | Keine Stippen |
| 16 | 53 | 59 | 3,1 | Keine Stippen |
| 18 | 54 | 69 | 4,1 | Keine Stippen |
| 58 (Vergleich) | 52 | 70 | 4,2 | Keine Stippen |

Weiterhin wurden pigmentierte Lacke hinsichtlich Ihrer Lagerstabilität untersucht. Dazu wurde die Epoxy-Komponente (Komponente A) eines 2-Komponenten (2K) Epoxy-Lacksystem mit dem bindemittelfreien Pigmentkonzentrat enthaltend Carbon Black FW 200 (Anteil: 1,5 Gew.-%) versetzt und über einen Zeitraum von 12 Wochen bei 50 °C gelagert. Die folgenden Tabellen geben einen Überblick über das eingesetzte 2-Komponenten-Lacksystem sowie die Lagerstabilität der untersuchten pigmentierten Epoxy-Komponente (Komponente A).

### Formulierung des 2K-Lacks

### Komponente A:

| | [%] |
|---|---|
| Epikote 1001 (75% in Xylol)¹ | 60.0 |
| Xylol | 17.0 |
| Methoxypropanol | 12.8 |
| n-Butanol | 10.0 |
| BYK-325 | 0.2 |
| | 100 |

| | |
|---|---|
| ¹ Epoxy-Bindemittel (Hexion) | |

### Komponente B:

| | [%] |
|---|---|
| Aradur 115 X 70¹ | 35,5 |
| Xylol | 6,0 |
| Methoxypropanol | 4,0 |
| n-Butanol | 4,5 |
| | 50,0 |

| | |
|---|---|
| ¹ Polyamidoamin (Huntsman) | |

### Untersuchung der Lagerstabilität:

| | | Lagerstabilität nach X Wochen | | | | | | | |
|---|---|---|---|---|---|---|---|---|---|
| | Gew.-% | 1 | 2 | 3 | 5 | 7 | 9 | 11 | 12 |
| Ohne Netz- und Dispergiermittel | - | OK | OK | OK | OK | OK | OK | OK | OK |
| 4 | 1,5 | OK | OK | OK | OK | OK | OK | OK | OK |
| 5 | 1,5 | OK | OK | OK | OK | OK | OK | OK | OK |
| 6 | 1,5 | OK | OK | OK | OK | OK | OK | OK | OK |
| 14 | 1,5 | OK | OK | OK | OK | OK | OK | OK | OK |
| 15 | 1,5 | OK | OK | OK | OK | OK | OK | OK | OK |
| 18 | 1,5 | OK | OK | OK | OK | OK | OK | OK | OK |
| 58 (Vergleich) | 1,5 | OK | OK | OK | OK | OK | OK | OK | OK |

Über die komplette Lagerzeit konnte kein Gelieren der Formulierungen beobachtet werden.

Zudem wurden die anwendungstechnischen Eigenschaften Glanz, Glanzschleier, Transparenz, Aufschwimmverhalten und Stippenbildung von pigmentierten 2K-Lacken untersucht.

Dabei handelte es sich um die folgenden 2K-Lacke, basierend auf den oben genannten Komponenten A und B sowie den Pigmentkonzentraten:

| | Bayferrox 120M | Heliogen Blue L 7101 F | FW 200 |
|---|---|---|---|
| Komponente A | 18,1 | 17,0 | 18,3 |
| Pigmentkonzentrat | 2,8 | 4,5 | 2,5 |

| Einarbeitung der Pigmentkonzentrate für 10 min mittels Scandex-Shaker | | | |
|---|---|---|---|
| Komponente B: | 9,1 | 8,5 | 9,2 |
| | | | |

| Einarbeitung der Pigmentkonzentrate für 1 min mittels Scandex-Shaker | | | |
|---|---|---|---|
| Xylol | 3,0 | 3,0 | 3,0 |
| Pigmentgehalt im 2K-Lack | 6% | 3% | 1% |

### Ergebnisse für Carbon Black FW200 / 2K-Lack

| | Glanz 20 °[GE] | Glanzschleier | Transparenz* | Stippenbildung |
|---|---|---|---|---|
| 4 | 81 | 15 | 1-2 | Keine Stippen |
| 5 | 91 | 19 | 1-2 | Keine Stippen |
| 6 | 90 | 17 | 1 | Keine Stippen |
| 7 | 79 | 25 | 1 | Einige Stippen |
| 15 | 84 | 18 | 2-3 | Keine Stippen |
| 16 | 86 | 21 | 2-3 | Keine Stippen |
| 18 | 78 | 25 | 3 | Keine Stippen |
| 58 (Vergleich) | 77 | 28 | 3 | Keine Stippen |

| | | | | |
|---|---|---|---|---|
| * Bewertung Nach Noten: 1 = sehr gut, 6 = mangelhaft) | | | | |

### Ergebnisse für Heliogen Blue L7101 F / 2K-Lack

| | Glanz 20 °[GE] | Glanzschleier | Transparenz* | Stippenbildung |
|---|---|---|---|---|
| 4 | 83 | 13 | 1-2 | Keine Stippen |
| 5 | 90 | 20 | 2 | Keine Stippen |
| 6 | 88 | 17 | 1-2 | Keine Stippen |
| 7 | 89 | 18 | 2 | Keine Stippen |
| 15 | 81 | 14 | 1-2 | Keine Stippen |
| 16 | 88 | 27 | 1 | Keine Stippen |
| 18 | 78 | 26 | 2 | Keine Stippen |
| 58 (Vergleich) | 80 | 23 | 2 | Keine Stippen |

| | | | | |
|---|---|---|---|---|
| * Bewertung Nach Noten: 1 = sehr gut, 6 = mangelhaft) | | | | |

### Ergebnisse für Bayferrox 120M / 2K-Lack

| | Glanz 20 °[GE] | Glanzschleier | ΔE-Werte | Stippenbildung |
|---|---|---|---|---|
| 4 | 88 | 19 | 1,7 | Keine Stippen |
| 5 | 83 | 21 | 1,9 | Keine Stippen |
| 6 | 86 | 18 | 1,6 | Keine Stippen |
| 7 | 87 | 28 | 1,4 | Keine Stippen |
| 15 | 83 | 18 | 1,7 | Keine Stippen |
| 16 | 86 | 16 | 1,8 | Keine Stippen |
| 18 | 79 | 26 | 2,2 | Keine Stippen |
| 58 (Vergleich) | 82 | 30 | 1,9 | Keine Stippen |

Die erfindungsgemäßen Netz- und Dispergiermittel zeigen gute Netz- und Dispergiereigenschaften in unterschiedlichen pigmentierten Beschichtungszusammensetzungen beziehungsweise Lacken mit sowohl anorganischen als auch organischen Pigmenten (Bayferrox 120M, Heliogen Blue L 7101 F und Carbon Black FW 200). Dies guten Netz- und Dispergiereigenschaften kommen durch die untersuchten anwendungstechnischen Eigenschaften wie Glanz, Glanzschleier, Transparenz und Stippenbildung klar zum Ausdruck. Dabei sind die Eigenschaften in einigen Lacksystemen vergleichbar mit oder sogar leicht besser als Eigenschaften, die sich beim Einsatz eines herkömmlichen Netz- und Dispergiermittels ergeben. In einigen weiteren Lacksystemen wird ein deutlich verbessertes Eigenschaftsprofil erreicht. Zudem weisen die erfindungsgemäßen Netz- und Dispergiermittel eine vergleichsweise helle Farbgebung auf. Insbesondere kann eine tiefschwarze Färbung vermieden werden. Die Breitenanwendbarkeit der erfindungsgemäßen Netz- und Dispergiermittel ist hervorragend und gegenüber dem Stand der Technik verbessert.

## Patentansprüche

1. Netz- und Dispergiermittel, dadurch herstellbar, dass
in Schritt (1)
(a) ein Aminogruppen-haltiges organisches Polymer enthaltend primäre und/oder sekundäre Aminogruppen
und
(b) mindestens eine verzweigte Polyhydroxymonocarbonsäure, welche neben einer Carboxylgruppe mindestens zwei Hydroxygruppen aufweist, von denen mindestens eine nicht an die Hauptkette des Moleküls gebunden ist,
durch Kondensationsreaktionen unter Bildung von Amidbindungen umgesetzt werden,
und
in Schritt (2)
zumindest ein Teil der Hydroxygruppen des in Schritt (1) erhaltenen hydroxyfunktionellen Reaktionsprodukts mit mindestens einem organischen Monoisocyanat unter Bildung von Urethanbindungen umgesetzt werden.

2. Netz- und Dispergiermittel gemäß Anspruch 1, **dadurch gekennzeichnet, dass** in Schritt (1) die Komponenten so umgesetzt werden, dass das Molverhältnis der primären und sekundären Aminogruppen der Komponente (a) zu Komponente (b) im Bereich von 0,01 bis 1 liegt.

3. Netz- und Dispergiermittel gemäß Anspruch 2, **dadurch gekennzeichnet, dass** in Schritt (1) die Komponenten so umgesetzt werden, dass das Molverhältnis der primären und sekundären Aminogruppen der Komponente (a) zu Komponente (b) im Bereich von 0,1 bis 1 liegt.

4. Netz- und Dispergiermittel gemäß einem der Ansprüche 1 bis 3, **dadurch gekennzeichnet, dass** in Schritt (2) mehr als 5 mol-% der Hydroxygruppen des unter Schritt (1) erhaltenen Reaktionsprodukts mit dem mindestens einen organischen Monoisocyanat umgesetzt werden.

5. Netz- und Dispergiermittel gemäß Anspruch 4, **dadurch gekennzeichnet, dass** in Schritt (2) 40 bis 80 mol-% der Hydroxygruppen des unter Schritt (1) erhaltenen Reaktionsprodukts mit dem mindestens einen organischen Monoisocyanat umgesetzt werden.

6. Netz- und Dispergiermittel gemäß einem der Ansprüche 1 bis 5, **dadurch gekennzeichnet, dass** die mindestens eine Polyhydroxymonocarbonsäure (b) vor der Umsetzung gemäß Schritt (1) unter Bildung von Esterbindungen mit Monomeren ausgewählt aus der Gruppe der Lactone, alkylsubstituierten Lactone und Monohydroxymonocarbonsäuren umgesetzt wird.

7. Netz- und Dispergiermittel gemäß Anspruch 6, **dadurch gekennzeichnet, dass** das Molverhältnis der Monomere ausgewählt aus der Gruppe der Lactone, alkylsubstituierten Lactone und Monohydroxymonocarbonsäuren zu der mindestens einen Polyhydroxymonocarbonsäure (b) im Bereich von 0,01/1 bis 1000/1 liegt.

8. Netz- und Dispergiermittel gemäß Anspruch 7, **dadurch gekennzeichnet, dass** das Molverhältnis der Monomere ausgewählt aus der Gruppe der Lactone, alkylsubstituierten Lactone und Monohydroxymonocarbonsäuren zu der mindestens einen Polyhydroxymonocarbonsäure (b) im Bereich von 1/1 bis 10/1 liegt.

9. Netz- und Dispergiermittel gemäß einem der Ansprüche 6 bis 8, **dadurch gekennzeichnet, dass** die Monomere ausgewählt werden aus der Gruppe der Lactone und alkylsubstituierten Lactone.

10. Netz- und Dispergiermittel gemäß Anspruch 9, **dadurch gekennzeichnet, dass** die Lactone und alkylsubstituierten Lactone aus der Gruppe bestehend aus ε-Caprolacton, δ-Valerolacton und γ-Butyrolacton ausgewählt sind.

11. Netz- und Dispergiermittel gemäß einem der Ansprüche 1 bis 10, **dadurch gekennzeichnet, dass** Komponente (b) 2,2-Bis(hydroxymethyl)propionsäure und/oder 2,2-Bis(hydroxymethyl)buttersäure ist.

12. Netz- und Dispergiermittel gemäß einem der Ansprüche 1 bis 11, **dadurch gekennzeichnet, dass** das Aminogruppen-haltige organische Polymer (a) ausgewählt wird aus der Gruppe der Polyethylenimine, Polyvinylamine, Polyallylamine sowie Copolymeren dieser Polymere.

13. Netz- und Dispergiermittel gemäß Anspruch 12, **dadurch gekennzeichnet, dass** das Aminogruppen-haltige organische Polymer (a) ausgewählt wird aus der Gruppe der Polyethylenimine.

14. Netz- und Dispergiermittel gemäß Anspruch 12 oder 13, **dadurch gekennzeichnet, dass** zumindest ein Teil der primären und/oder sekundären Aminogruppen des Aminogruppen-haltigen organischen Polymers (a) vor der Umsetzung gemäß Schritt (1) mit Monomeren ausgewählt aus der Gruppe der Lactone, alkylsubstituierten Lactone, Monohydroxymonocarbonsäuren und Monocarbonsäuren unter Bildung von Amid- und gegebenenfalls Esterbindungen umgesetzt wird.

15. Netz- und Dispergiermittel gemäß Anspruch 14, **dadurch gekennzeichnet, dass** das Molverhältnis der Monomere ausgewählt aus der Gruppe der Lactone, alkylsubstituierten Lactone, Monohydroxymonocarbonsäuren und Monocarbonsäuren zu den primären und/oder sekundären Aminogruppen des Aminogruppen-haltigen organischen Polymers (a) im Bereich von 1/1 bis 100/1 liegt.

16. Netz- und Dispergiermittel gemäß Anspruch 15, **dadurch gekennzeichnet, dass** das Molverhältnis der Monomere ausgewählt aus der Gruppe der Lactone, alkylsubstituierten Lactone, Monohydroxymonocarbonsäuren und Monocarbonsäuren zu den primären und/oder sekundären Aminogruppen des Aminogruppen-haltigen organischen Polymers (a) im Bereich von 5/1 bis 20/1 liegt.

17. Netz- und Dispergiermittel gemäß einem der Ansprüche 14 bis 16, **dadurch gekennzeichnet, dass** die Monomere ausgewählt werden aus der Gruppe der Lactone und alkylsubstituierten Lactone.

18. Netz- und Dispergiermittel gemäß Anspruch 17, **dadurch gekennzeichnet, dass** die Lactone und alkylsubstituierten Lactone aus der Gruppe bestehend aus ε-Caprolacton, δ-Valerolacton und γ-Butyrolacton ausgewählt sind.

19. Netz- und Dispergiermittel gemäß einem der Ansprüche 1 bis 18, **dadurch gekennzeichnet, dass** die organischen Monoisocyanate ausgewählt sind aus der Gruppe der Monoisocyanate enthaltend einen linearen oder verzweigten oder cyclischen Alkylrest mit gegebenenfalls weiteren linearen und/oder verzweigten Gruppen, der gegebenenfalls eine oder mehrere Doppel- und/oder Dreifachbindungen enthält und der 1 bis 50 Kohlenstoffatome aufweist, der Arylisocyanate, der isocyanatfunktionellen Polyether, der isocyanatfunktionellen Polyester, der isocyanatfunktionellen Polytetrahydrofurane, der isocyanatfunktionellen Polyetherester und der Fettsäuremonoisocyanate sowie aus Mischungen solcher Verbindungen.

20. Netz- und Dispergiermittel gemäß Anspruch 19, **dadurch gekennzeichnet, dass** mindestens ein organisches Monoisocyanat ein Umsetzungsprodukt eines Diisocyanats mit einem Monoalkohol ist.

21. Netz- und Dispergiermittel gemäß Anspruch 19 oder 20, **dadurch gekennzeichnet, dass** mindestens ein organisches Monoisocyanat ein isocyanatfunktioneller Polyether, ein isocyanatfunktionelles Polytetrahydrofuran, ein isocyanatfunktioneller Polyester und/oder ein isocyanatfunktioneller Polyetherester ist.

22. Verfahren zur Herstellung eines Netz- und Dispergiermittels gemäß einem der Ansprüche 1 bis 21, **dadurch gekennzeichnet, dass**
in Schritt (1)
(a) ein Aminogruppen-haltiges organisches Polymer enthaltend primäre und/oder sekundäre Aminogruppen
und
(b) mindestens eine verzweigte Polyhydroxymonocarbonsäure, welche neben einer Carboxylgruppe mindestens zwei Hydroxygruppen aufweist, von denen mindestens eine nicht an die Hauptkette des Moleküls gebunden ist,
durch Kondensationsreaktionen unter Bildung von Amidbindungen umgesetzt werden,
und
in Schritt (2)
zumindest ein Teil der Hydroxygruppen des in Schritt (1) erhaltenen hydroxyfunktionellen Reaktionsprodukts mit mindestens einem organischen Monoisocyanat unter Bildung von Urethanbindungen umgesetzt werden.

23. Verwendung eines Netz- und Dispergiermittels gemäß einem der Ansprüche 1 bis 21 in einem pigment- und/oder füllstoffhaltigen Produkt ausgewählt aus der Gruppe der Pigmentpasten, Beschichtungszusammensetzungen, Dichtstoffe, Druckfarben, Tinten und Kunststoffe.

24. Verwendung gemäß Anspruch 23, **dadurch gekennzeichnet** das das Netz- und Dispergiermittels in einer Pigmentpaste oder einer Beschichtungszusammensetzung verwendet wird.

25. Pigment- und/oder füllstoffhaltiges Produkt ausgewählt aus der Gruppe der Pigmentpasten, Beschichtungszusammensetzungen, Dichtstoffe, Druckfarben, Tinten und Kunststoffe enthaltend ein Netz- und Dispergiermittel gemäß einem der Ansprüche 1 bis 21.

26. Pigment- und/oder füllstoffhaltiges Produkt gemäß Anspruch 25, **dadurch gekennzeichnet, dass** das Produkt eine Pigmentpaste oder eine Beschichtungszusammensetzung ist.

## Claims

1. A wetting and dispersing agent preparable by
in step (1) reacting
(a) an amino-group-containing organic polymer containing primary and/or secondary amino groups
and
(b) at least one branched polyhydroxymonocarboxylic acid which as well as a carboxyl group has at least two hydroxyl groups, of which at least one is not bonded to the main chain of the molecule,
by condensation reactions with formation of amide bonds,
and
in step (2) reacting
at least some of the hydroxyl groups of the hydroxyfunctional reaction product obtained in step (1) with at least one organic monoisocyanate to form urethane bonds.

2. The wetting and dispersing agent as claimed in claim 1, **characterized in that** in step (1) the components are reacted such that the molar ratio of the primary and secondary amino groups of component (a) to component (b) is in the range from 0.01 to 1.

3. The wetting and dispersing agent as claimed in claim 2, **characterized in that** in step (1) the components are reacted such that the molar ratio of the primary and secondary amino groups of component (a) to component (b) is in the range from 0.1 to 1.

4. The wetting and dispersing agent as claimed in any of claims 1 to 3, **characterized in that** in step (2) more than 5 mol% of the hydroxyl groups of the reaction product obtained in step (1) are reacted with the at least one organic monoisocyanate.

5. The wetting and dispersing agent as claimed in claim 4, **characterized in that** in step (2) 40 to 80 mol% of the hydroxyl groups of the reaction product obtained in step (1) are reacted with the at least one organic monoisocyanate.

6. The wetting and dispersing agent as claimed in any of claims 1 to 5, **characterized in that** the at least one polyhydroxymonocarboxylic acid (b), before the reaction according to step (1), is reacted with monomers selected from the group of lactones, alkyl-substituted lactones, and monohydroxymonocarboxylic acids with formation of ester bonds.

7. The wetting and dispersing agent as claimed in claim 6, **characterized in that** the molar ratio of the monomers selected from the group of lactones, alkyl-substituted lactones and monohydroxymonocarboxylic acids to the at least one polyhydroxymonocarboxylic acid (b) is in the range from 0.01/1 to 1000/1.

8. The wetting and dispersing agent as claimed in claim 7, **characterized in that** the molar ratio of the monomers selected from the group of lactones, alkyl-substituted lactones and monohydroxymonocarboxylic acids to the at least one polyhydroxymonocarboxylic acid (b) is in the range from 1/1 to 10/1.

9. The wetting and dispersing agent as claimed in any of claims 6 to 8, **characterized in that** the monomers are selected from the group of lactones and alkyl-substituted lactones.

10. The wetting and dispersing agent as claimed in claim 9, **characterized in that** the lactones and alkyl-substituted lactones are selected from the group consisting of ε-caprolactone, δ-valerolactone, and γ-butyrolactone.

11. The wetting and dispersing agent as claimed in any of claims 1 to 10, **characterized in that** component (b) is 2,2-bis(hydroxymethyl)propionic acid and/or 2,2-bis(hydroxymethyl)butyric acid.

12. The wetting and dispersing agent as claimed in any of claims 1 to 11, **characterized in that** the amino-group-containing organic polymer (a) is selected from the group of polyethyleneimines, polyvinylamines, polyallylamines and copolymers of these polymers.

13. The wetting and dispersing agent as claimed in claim 12, **characterized in that** the amino-group-containing organic polymer (a) is selected from the group of polyethyleneimines.

14. The wetting and dispersing agent as claimed in claim 12 or 13, **characterized in that** at least some of the primary and/or secondary amino groups of the amino-group-containing organic polymer (a), before the reaction of step (1), is reacted with monomers selected from the group of lactones, alkyl-substituted lactones, monohydroxymonocarboxylic acids, and monocarboxylic acids, to form amide bonds and optionally ester bonds.

15. The wetting and dispersing agent as claimed in claim 14, **characterized in that** the molar ratio of the monomers selected from the group of lactones, alkyl-substituted lactones, monohydroxymonocarboxylic acids, and monocarboxylic acids to the primary and/or secondary amino groups of the amino-group-containing organic polymer (a) is in the range from 1/1 to 100/1.

16. The wetting and dispersing agent as claimed in claim 15, **characterized in that** the molar ratio of the monomers selected from the group of lactones, alkyl-substituted lactones, monohydroxymonocarboxylic acids, and monocarboxylic acids to the primary and/or secondary amino groups of the amino-group-containing organic polymer (a) is in the range from 5/1 to 20/1.

17. The wetting and dispersing agent as claimed in any of claims 14 to 16, **characterized in that** the monomers are selected from the group of lactones and alkyl-substituted lactones.

18. The wetting and dispersing agent as claimed in claim 17, **characterized in that** the lactones and alkyl-substituted lactones are selected from the group consisting of ε-caprolactone, δ-valerolactone, and γ-butyrolactone.

19. The wetting and dispersing agent as claimed in any of claims 1 to 18, **characterized in that** the organic monoisocyanates are selected from the group of monoisocyanates containing a linear or branched or cyclic alkyl radical having optionally further linear and/or branched groups, which optionally contains one or more double and/or triple bonds and has 1 to 50 carbon atoms, aryl isocyanates, isocyanate-functional polyethers, isocyanate-functional polyesters, isocyanate-functional polytetrahydrofurans, isocyanate-functional polyetheresters, and fatty acid monoisocyanates, and also from mixtures of such compounds.

20. The wetting and dispersing agent as claimed in claim 19, **characterized in that** at least one organic monoisocyanate is a reaction product of a diisocyanate with a monoalcohol.

21. The wetting and dispersing agent as claimed in claim 19 or 20, **characterized in that** at least one organic monoisocyanate is an isocyanate-functional polyether, an isocyanate-functional polytetrahydrofuran, an isocyanate-functional polyester and/or an isocyanate-functional polyetherester.

22. A method for producing a wetting and dispersing agent as claimed in any of claims 1 to 21, **characterized in that** in step (1)
(a) an amino-group-containing organic polymer containing primary and/or secondary amino groups
and
(b) at least one branched polyhydroxymonocarboxylic acid which as well as a carboxyl group has at least two hydroxyl groups, of which at least one is not bonded to main chain of the molecule,
are reacted by condensation reactions with formation of amide bonds,
and
in step (2)
at least some of the hydroxyl groups of the hydroxyfunctional reaction product obtained in step (1) are reacted with at least one organic monoisocyanate to form urethane bonds.

23. The use of a wetting and dispersing agent as claimed in any of claims 1 to 21 in a pigment- and/or filler-containing product selected from the group of pigment pastes, coating compositions, sealants, printing inks, liquid inks, and plastics.

24. The use as claimed in claim 23, **characterized in that** the wetting and dispersing agent is used in a pigment paste or a coating composition.

25. A pigment- and/or filler-containing product selected from the group of pigment pastes, coating compositions, sealants, printing inks, liquid inks and plastics, comprising a wetting and dispersing agent as claimed in any of claims 1 to 21.

26. The pigment- and/or filler-containing product as claimed in claim 25, **characterized in that** the product is a pigment paste or a coating composition.

## Revendications

1. Agent mouillant et dispersant qui peut être fabriqué en réagissant,
dans l'étape (1),
(a) un polymère organique contenant des groupes amine primaires et/ou secondaires
et
(b) au moins un acide polyhydroxymonocarboxylique ramifié contenant, outre un groupe carboxyle, au moins deux groupes hydroxy dont au moins un n'est pas lié à la chaîne principale de la molécule,
par des réactions de condensation en formant des liaisons amide,
et
dans l'étape (2),
en réagissant au moins une partie des groupes hydroxy du produit de réaction à fonction hydroxy obtenu dans l'étape (1) avec au moins un monoisocyanate organique en formant des liaisons uréthane.

2. Agent mouillant et dispersant selon la revendication 1, **caractérisé en ce que** dans l'étape (1) les composants sont réagis de telle manière que le rapport molaire des groupes amine primaires et secondaires du composant (a) et du composant (b) est compris dans la gamme de 0,01 à 1.

3. Agent mouillant et dispersant selon la revendication 2, **caractérisé en ce que** dans l'étape (1) les composants sont réagis de telle manière que le rapport molaire des groupes amine primaires et secondaires du composant (a) et du composant (b) est compris dans la gamme de 0,1 à 1.

4. Agent mouillant et dispersant selon l'une quelconque des revendications 1 à 3, **caractérisé en ce que** dans l'étape (2) plus de 5 % en mole des groupes hydroxy du produit de réaction obtenu dans l'étape (1) sont réagis avec l'au moins un monoisocyanate organique.

5. Agent mouillant et dispersant selon la revendication 4, **caractérisé en ce que** dans l'étape (2) 40 à 80 % en mole des groupes hydroxy du produit de réaction obtenu dans l'étape (1) sont réagis avec l'au moins un monoisocyanate organique.

6. Agent mouillant et dispersant selon l'une quelconque des revendications 1 à 5, **caractérisé en ce que** l'au moins un acide polyhydroxymonocarboxylique (b) est réagi, avant la réaction selon l'étape (1), avec des monomères choisis dans le groupe des lactones, des lactones substituées par un alkyle et des acides monohydroxymonocarboxyliques, en formant des liaisons ester.

7. Agent mouillant et dispersant selon la revendication 6, **caractérisé en ce que** le rapport molaire entre les monomères, choisis dans le groupe des lactones, des lactones substituées par un alkyle et des acides monohydroxymonocarboxyliques, et l'au moins un acide polyhydroxymonocarboxylique (b) est compris dans la gamme de 0,01/1 à 1000/1.

8. Agent mouillant et dispersant selon la revendication 7, **caractérisé en ce que** le rapport molaire entre les monomères, choisis dans le groupe des lactones, des lactones substituées par un alkyle et des acides monohydroxymonocarboxyliques, et l'au moins un acide polyhydroxymonocarboxylique (b) est compris dans la gamme de 1/1 à 10/1.

9. Agent mouillant et dispersant selon l'une quelconque des revendications 6 à 8, **caractérisé en ce que** les monomères sont choisis dans le groupe des lactones et des lactones substituées par un alkyle.

10. Agent mouillant et dispersant selon la revendication 9, **caractérisé en ce que** les lactones et les lactones substituées par un alkyle sont choisies dans le groupe consistant en ε-caprolactone, δ-valérolactone et γ-butyrolactone.

11. Agent mouillant et dispersant selon l'une quelconque des revendications 1 à 10, **caractérisé en ce que** le composant (b) est l'acide 2,2-bis(hydroxy-méthyl)propanoique et/ou l'acide 2,2-bis(hydroxyméthyl)butyrique.

12. Agent mouillant et dispersant selon l'une quelconque des revendications 1 à 11, **caractérisé en ce que** le polymère organique (a) contenant des groupes amine est choisi dans le groupe des polyéthylènimines, polyvinylamines, polyallylamines et des copolymères de ces polymères.

13. Agent mouillant et dispersant selon la revendication 12, **caractérisé en ce que** le polymère (a) contenant des groupes amine est choisi dans le groupe des polyéthylènimines.

14. Agent mouillant et dispersant selon la revendication 12 ou 13, **caractérisé en ce qu**'au moins une partie des groupes amine primaires et/ou secondaires du polymère (a) contenant des groupes amine est réagie, avant la réaction selon l'étape (1), avec des monomères choisis dans le groupe des lactones, des lactones substituées par un alkyle, des acides monohydroxymonocarboxyliques et des acides monocarboxyliques en formant des liaisons amide et, le cas échéant, des liaisons ester.

15. Agent mouillant et dispersant selon la revendication 14, **caractérisé en ce que** le rapport molaire entre les monomères, choisis dans le groupe des lactones, des lactones substituées par un alkyle, des acides monohydroxymonocarboxyliques et des acides monocarboxyliques, et les groupes amine primaires et/ou secondaires du polymère organique (a) contenant des groupes amine est compris dans la gamme de 1/1 à 100/1.

16. Agent mouillant et dispersant selon la revendication 15, **caractérisé en ce que** le rapport molaire entre les monomères, choisis dans le groupe des lactones, des lactones substituées par un alkyle, des acides monohydroxymonocarboxyliques et des acides monocarboxyliques, et les groupes amine primaires et/ou secondaires du polymère organique (a) contenant des groupes amine est compris dans la gamme de 5/1 à 20/1.

17. Agent mouillant et dispersant selon l'une quelconque des revendications 14 à 16, **caractérisé en ce que** les monomères sont choisis dans le groupe des lactones et des lactones substituées par un alkyle.

18. Agent mouillant et dispersant selon la revendication 17, **caractérisé en ce que** les lactones et les lactones substituées par un alkyle sont choisies dans le groupe consistant en ε-caprolactone, δ-valérolactone et γ-butyrolactone.

19. Agent mouillant et dispersant selon l'une quelconque des revendications 1 à 18, **caractérisé en ce que** les monoisocyanates organiques sont choisis dans le groupe des monoisocyanates contenant un groupement alkyle linéaire ou ramifié ou cyclique avec, le cas échéant, des autres groupes linéaires et/ou ramifiés, et contenant, le cas échéant, une ou plusieurs doubles et/ou triples liaisons et présentant de 1 à 50 atomes de carbone, des isocyanates d'aryle, des polyéthers à fonction isocyanate, des polyesters à fonction isocyanate, des polytétrahydrofurannes à fonction isocyanate, des polyétheresters à fonction isocyanate, des monoisocyanates d'acide gras et des mélanges de ces composés.

20. Agent mouillant et dispersant selon la revendication 19, **caractérisé en ce qu**'au moins un monoisocyanate organique est un produit de réaction d'un diisocyanate avec un monoalcool.

21. Agent mouillant et dispersant selon la revendication 19 ou 20, **caractérisé en ce qu**'au moins un monoisocyanate organique est un polyéther à fonction isocyanate, un polytétrahydrofuranne à fonction isocyanate, un polyester à fonction isocyanate et/ou un polyétherester à fonction isocyanate.

22. Procédé pour la fabrication d'un agent mouillant et dispersant selon l'une quelconque des revendications 1 à 21 , **caractérisé en ce que,**
dans l'étape (1),
(a) un polymère organique contenant des groupes amine primaires et/ou secondaires
et
(b) au moins un acide polyhydroxymonocarboxylique ramifié contenant, outre un groupe carboxyle, au moins deux groupes hydroxy dont au moins un n'est pas lié à la chaîne principale de la molécule,
sont réagis par des réactions de condensation en formant des liaisons amide,
et
dans l'étape (2),
au moins une partie des groupes hydroxy du produit de réaction à fonction hydroxy obtenu dans l'étape (1) est réagie avec au moins un monoisocyanate organique en formant des liaisons uréthane.

23. Utilisation d'un agent mouillant et dispersant selon l'une quelconque des revendications 1 à 21 dans un produit contenant des pigments et/ou des matériaux de remplissage, choisi dans le groupe des pâtes de pigment, compositions de revêtement, matières d'étanchéité, couleurs d'imprimerie, encres et matières plastiques.

24. Utilisation selon la revendication 23, **caractérisée en ce que** l'agent mouillant et dispersant est utilisé dans une pâte de pigment ou une composition de revêtement.

25. Produit contenant des pigments et/ou des matériaux de remplissage, choisi dans le groupe des pâtes de pigment, compositions de revêtement, matières d'étanchéité, couleurs d'imprimerie, encres et matières plastiques, le produit contenant un agent mouillant et dispersant selon l'une quelconque des revendications 1 à 21.

26. Produit contenant des pigments et/ou des matériaux de remplissage selon la revendication 25, **caractérisé en ce que** le produit est une pâte de pigment ou une composition de revêtement.
